# EUROPEAN PATENT SPECIFICATION

(11) **EP 2 816 205 B1**
(45) Date of publication and mention of the grant of the patent: **18.08.2021**
(21) Application number: 12868535.1
(22) Date of filing: 14.02.2012
(51) Int. Cl.: F01N 3/08, F01N 3/36, B01D 53/94, F01N 3/035, F01N 3/20, F01N 3/10

(54) **EXHAUST PURIFICATION DEVICE FOR INTERNAL COMBUSTION ENGINE**
ABGASREINIGUNGSVORRICHTUNG FÜR EINEN VERBRENNUNGSMOTOR
DISPOSITIF DE PURIFICATION DE GAZ D'ÉCHAPPEMENT POUR MOTEUR À COMBUSTION INTERNE

(43) Date of publication of application: 24.12.2014
(73) Proprietor: TOYOTA JIDOSHA KABUSHIKI KAISHA, Toyota-shi, Aichi-ken, 471-8571 (JP)
(72) Inventor: UMEMOTO, Kazuhiro, Toyota-shi, Aichi-ken, 471-8571 (JP); YOSHIDA, Kohei, Toyota-shi, Aichi-ken, 471-8571 (JP); INOUE, Mikio, Toyota-shi, Aichi-ken, 471-8571 (JP)
(74) Representative: TBK
(86) International application number: PCT/JP2012/053372
(87) International publication number: WO 2013/121520

(56) References cited:
- EP-A1- 1 133 355
- EP-A1- 1 355 048
- EP-A1- 2 402 571
- WO-A1-2011/145228
- JP-A- 2002 188 435
- JP-A- 2003 097 250
- JP-A- 2010 270 624
- US-A1- 2005 129 601
- US-A1- 2006 248 881
- US-A1- 2008 241 032
- US-A1- 2010 236 224
- US-A1- 2011 179 777

## Description

### Technical Field

The present invention relates to an exhaust purification system of an internal combustion engine.

### Background Art

The exhaust of diesel engines, gasoline engines, and other internal combustion engines includes, for example, carbon monoxide (CO), unburned fuel comprised of hydrocarbons (HC), nitrogen oxides (NO_{X}), particulate matter (PM), and other constituents. As devices for removing NOx, a reduction catalyst which continuously reduces the NOx which is contained in exhaust by the feed of a reducing agent to the exhaust purification catalyst or an NOx storage catalyst which stores NOx when the exhaust gas is lean in air-fuel ratio and releases the stored NOx when the exhaust gas is made rich in air-fuel ratio are known.

JP 2003 166412 A discloses a particulate filter as a device which traps particulate matter. The particulate filter has partition walls which separate exhaust inflow passages and the exhaust outflow passages. When the exhaust passes through the partition walls, the particulate matter is trapped. Furthermore, this publication discloses arranging a carrier on the surface of the circumferential walls of the exhaust inflow passages and the exhaust outflow passages and carrying a storage reduction type NOx catalyst on the carrier. It discloses that this filter has the property of the pressure loss of the filter no longer rising after a process of increase of pressure loss at a filter when the amount of deposited particulate increases. In the system of this publication, the particulate which is deposited after saturation of pressure loss is burned off and removed.

JP H09 220440 A discloses an exhaust gas purification method which reacts the NOx in the exhaust gas with HC to form a nitrated hydrocarbon compound then reduces the nitrated hydrocarbon compound by bringing it into contact with a catalyst. This method includes a first step and a second step. The first step reacts the NOx in the exhaust gas with HC to form a nitrated hydrocarbon compound. This reaction is generally performed by nitration of the HC. In this reaction, heat, light, or other energy is supplied to a location where HC and NOx are copresent to make the NO oxidize or the HC is radicalized to nitride it. Further, the second step brings the nitrated hydrocarbon compound into contact with a catalyst to make the nitrated hydrocarbon compound react with the HC to reduce it and oxidize the HC component. This publication discloses converting NOx to a nitrated hydrocarbon compound, then reacting this on a catalyst to thereby greatly improve the NOx removal rate.

EP 2 402 571 A1 discloses an exhaust purification system of an internal combustion engine, which is provided inside an engine exhaust passage with a hydrocarbon feed valve for feeding hydrocarbons. The exhaust purification system comprises an exhaust purification catalyst for causing NOx contained in exhaust gas and hydrocarbons reformed at the exhaust purification catalyst to react, a particulate filter having a function of trapping particulate matter contained in the exhaust gas, and a control device. The exhaust purification catalyst is arranged downstream of the hydrocarbon feed valve in the engine exhaust passage, carries precious metal catalysts and a basic layer on an exhaust gas flow surface of the exhaust purification catalyst. The control device is formed so that at the time of engine operation, an amplitude of change of the concentration of hydrocarbons flowing into the exhaust purification catalyst is made to become within a predetermined range of amplitude by control of a feed amount of hydrocarbons from the hydrocarbon feed valve and a concentration of hydrocarbons flowing into the exhaust purification catalyst is made to oscillate within a predetermined range of period by control of the feed interval of hydrocarbons from the hydrocarbon feed valve. The feed amount and feed interval of the hydrocarbons are set such that the exhaust purification catalyst reduces the NOx contained in the exhaust gas.

US 2005/0129601 A1 discloses an exhaust purification system of an internal combustion engine having the features set out in the preambles of claims 1 and 5.

### Citations List

### Patent Literature

PLT 1: JP 2003 166412 A
PLT 2: JP H09 220440 A

### Summary of Invention

PLT 3: EP 2 402 571 A1
PLT 4: US 2005/0129601 A1

### Technical Problem

The particulate filter which is disclosed in JP 2003 166412 A has the function of a storage reduction type NOx catalyst, that is, can trap particulate matter and can store NOx and reduce NOx when releasing it. In this regard, in this particulate filter, there was the problem that when the temperature of the particulate filter became high, the NOx removal rate fell. Further, JP H09 220440 A discloses a method of forming a nitrated hydrocarbon compound and reacting the nitrated hydrocarbon compound with hydrocarbons to reduce them. In this method, there was the problem that when the flow rate of exhaust gas was fast etc., the reaction time of the reducing intermediates became insufficient and NOx could not be sufficiently removed.

The present invention has as its object the provision of an exhaust purification system of an internal combustion engine which can remove particulate matter in exhaust and can remove NOx by a high NOx removal rate even at a high temperature.

### Solution to Problem

According to a first aspect of the present invention, the exhaust purification system of an internal combustion engine has the features set out in claim 1. According to a second aspect of the present invention, the exhaust purification system of an internal combustion engine has the features set out in claim 5.

In the above aspects of the present invention, the exhaust purification catalyst preferably does not have the basic parts arranged at the coated parts of the inflow side passages but has the basic parts arranged at the coated parts of the outflow side passages.

In the above aspects of the present invention, the exhaust purification catalyst is preferably formed so that precious metal catalysts and the basic parts are arranged at the coated parts of the inflow side passages and the coated parts of the outflow side passages and the weight per unit volume of the basic parts which are arranged at the coated parts of the inflow side passages becomes smaller than the weight per unit volume of the basic parts which are arranged at the coated parts of the outflow side passages.

In the above first aspect of the present invention, preferably when the operating state of the internal combustion engine where the feed amount of hydrocarbons becomes greater shifts to the predetermined operating state where the flow rate of exhaust gas is reduced, the feed of hydrocarbons which are fed by within the predetermined range of amplitude and by within the predetermined range of period is prohibited.

In the above second aspect of the present invention, preferably when the amount of deposition of particulate matter exceeds the predetermined deposition judgment value and the temperature of the exhaust purification catalyst further exceeds the predetermined catalyst temperature judgment value, the feed of hydrocarbons which are fed by within the predetermined range of amplitude and by within the predetermined range of period is prohibited.

### Advantageous Effects of Invention

According to the present invention, it is possible to provide an exhaust purification system of an internal combustion engine which can remove particulate matter in exhaust gas and can remove NOx by a high NOx removal rate even at a high temperature.

### Brief Description of Drawings

FIG. 1 is an overall view of an internal combustion engine in an embodiment.
FIG. 2 is a view which schematically shows a surface part of a catalyst carrier of an exhaust purification catalyst.
FIG. 3 is a view which explains an oxidation reaction of hydrocarbons in an exhaust purification catalyst.
FIG. 4 is a view which shows changes in an air-fuel ratio of exhaust gas which flows into an exhaust purification catalyst in a first NOx removal method.
FIG. 5 is a view which shows an NOx removal rate of the first NOx removal method.
FIG. 6A is an enlarged view which explains an oxidation reduction reaction of an exhaust purification catalyst in the first NOx removal method.
FIG. 6B is an enlarged view which explains production of reducing intermediates in the first NOx removal method.
FIG. 7A is an enlarged view which explains storage of NOx in an exhaust purification catalyst in a second NOx removal method.
FIG. 7B is an enlarged view which explains release and reduction of NOx of an exhaust purification catalyst in the second NOx removal method.
FIG. 8 is a view which shows changes in an air-fuel ratio of exhaust gas which flows into an exhaust purification catalyst in the second NOx removal method.
FIG. 9 is a view which shows an NOx removal rate in the second NOx removal method.
FIG. 10 is a time chart which shows changes in an air-fuel ratio of exhaust gas which flows into an exhaust purification catalyst in the first NOx removal method.
FIG. 11 is another time chart which shows changes in the air-fuel ratio of exhaust gas which flows into an exhaust purification catalyst in the first NOx removal method.
FIG. 12 is a view which shows the relationship between the oxidizing power of an exhaust purification catalyst and a demanded minimum air-fuel ratio X in the first NOx removal method.
FIG. 13 is a view which shows the relationship between a concentration of oxygen in exhaust gas and an amplitude ΔH of the concentration of hydrocarbons which gives the same NOx removal rate in the first NOx removal method.
FIG. 14 is a view which shows the relationship between an amplitude ΔH of the concentration of hydrocarbons and an NOx removal rate in the first NOx removal method.
FIG. 15 is a view which shows the relationship between an oscillation period ΔT of the concentration of hydrocarbons and an NOx removal rate in the first NOx removal method.
FIG. 16A is a map which shows the injection time period of hydrocarbons in the first NOx removal method.
FIG. 16B is a map which shows the feed interval of hydrocarbons in the first NOx removal method.
FIG. 17 is a view which shows changes in the air-fuel ratio of the exhaust gas which flows into the exhaust purification catalyst in the second NOx removal method.
FIG. 18 is a view which shows a map of an NOx amount NOXA which is exhausted from an engine body to the engine exhaust passage.
FIG. 19 is a view which shows a fuel injection timing when performing auxiliary injection in a combustion chamber.
FIG. 20 is a view which shows a map of the hydrocarbon feed amount WR when performing auxiliary injection.
FIG. 21 is a graph which explains the regions of the NO_{X} removal methods based on the operating state of the internal combustion engine.
FIG. 22 is a front view of the exhaust purification catalyst in the embodiment as seen from the side where the exhaust gas flows in.
FIG. 23 is a schematic cross-sectional view of an exhaust purification catalyst in the embodiment.
FIG. 24 is an enlarged schematic cross-sectional view of the vicinity of the outlet of the exhaust purification catalyst in the embodiment.
FIG. 25 is an enlarged schematic cross-sectional view of the surface of the catalyst carrier at an inflow side passage of the first exhaust purification catalyst in the embodiment.
FIG. 26 is a schematic view of the second exhaust purification catalyst in the embodiment.
FIG. 27 is an enlarged schematic cross-sectional view of the surface of the catalyst carrier at a downstream side part of the second exhaust purification catalyst in the embodiment.
FIG. 28 is a flow chart of first operational control of the exhaust purification system in the embodiment.
FIG. 29 is a flow chart of second operational control of the exhaust purification system in the embodiment.

### Description of Embodiments

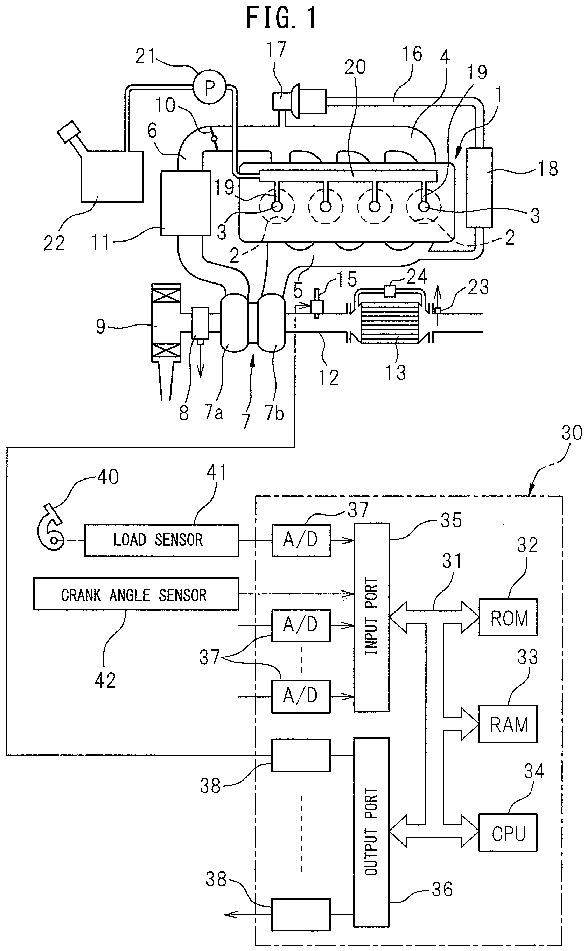

Referring to FIG. 1 to FIG. 29, an exhaust purification system of an internal combustion engine in an embodiment will be explained. In the present embodiment, a compression ignition type of internal combustion engine which is mounted in a vehicle will be taken up as an example for the explanation.

FIG. 1 is an overall view of an internal combustion engine in the present embodiment. The internal combustion engine is provided with an engine body 1. Further, the internal combustion engine is provided with an exhaust purification system which purifies the exhaust. The engine body 1 includes combustion chambers 2 as cylinders, electronically controlled fuel injectors 3 for injecting fuel to the combustion chambers 2, an intake manifold 4, and an exhaust manifold 5.

The intake manifold 4 is connected through an intake duct 6 to an outlet of a compressor 7a of an exhaust turbocharger 7. An inlet of the compressor 7a is connected through an intake air detector 8 to an air cleaner 9. Inside the intake duct 6, a throttle valve 10 is arranged which is driven by a step motor. Furthermore, in the middle of the intake duct 6, a cooling device 11 is arranged for cooling the intake air which flows through the inside of the intake duct 6. In the embodiment which is shown in FIG. 1, engine cooling water is guided to the cooling device 11. The engine cooling water is used to cool the intake air.

On the other hand, the exhaust manifold 5 is connected to the inlet of the exhaust turbine 7b of the exhaust turbocharger 7. The outlet of the exhaust turbine 7b is connected through the exhaust pipe 12 to the inlet of the exhaust purification catalyst 13.

Upstream of the exhaust purification catalyst 13, a hydrocarbon feed valve 15 is arranged for feeding hydrocarbons comprised of diesel oil which is used as the fuel of a compression ignition type internal combustion engine or other fuel. In the present embodiment, diesel oil is used as the hydrocarbons which are fed from the hydrocarbon feed valve 15. Note that, the present invention can also be applied to a spark ignition type of internal combustion engine in which the air-fuel ratio at the time of combustion is controlled to be lean. In this case, from the hydrocarbon feed valve, hydrocarbons comprised of gasoline which is used as the fuel of the spark ignition type of internal combustion engine or other fuel are fed.

Between the exhaust manifold 5 and the intake manifold 4, an EGR passage 16 is arranged for exhaust gas recirculation (EGR). In the EGR passage 16, an electronic control type of EGR control valve 17 is arranged. Further, in the middle of the EGR passage 16, a cooling device 18 is arranged for cooling the EGR gas which flows through the inside of the EGR passage 16. In the embodiment which is shown in FIG. 1, engine cooling water is guided to the inside of the cooling device 18. The engine cooling water is used to cool the EGR gas.

The respective fuel injectors 3 are connected through fuel feed tubes 19 to a common rail 20. The common rail 20 is connected through an electronic control type of variable discharge fuel pump 21 to a fuel tank 22. The fuel which is stored in the fuel tank 22 is fed by the fuel pump 21 to the inside of the common rail 20. The fuel which is fed to the common rail 20 is fed through the respective fuel feed tubes 19 to the fuel injectors 3.

An electronic control unit 30 is comprised of a digital computer. The electronic control unit 30 in the present embodiment functions as a control device of the exhaust purification system. The electronic control unit 30 includes components which are connected to each other by a bidirectional bus 31 such as a ROM (read only memory) 32, RAM (random access memory) 33, CPU (microprocessor) 34, input port 35, and output port 36.

Downstream of the exhaust purification catalyst 13, a temperature sensor 23 is attached for detecting the temperature of the exhaust purification catalyst 13. The output signals of these temperature sensor 23 and intake air detector 8 are input through the respectively corresponding AD converters 37 to the input port 35.

Further, an accelerator pedal 40 has a load sensor 41 connected to it which generates an output voltage which is proportional to the amount of depression of the accelerator pedal 40. The output voltage of the load sensor 41 is input through a corresponding AD converter 37 to the input port 35. Furthermore, the input port 35 has connected to it a crank angle sensor 42 which generates an output pulse every time the crankshaft rotates by for example 15°. The output of the crank angle sensor 42 can be used to detect the crank angle or the engine speed. On the other hand, the output port 36 is connected through corresponding drive circuits 38 to the fuel injectors 3, step motor for driving the throttle valve 10, hydrocarbon feed valve 15, EGR control valve 17, and fuel pump 21. These fuel injectors 3, throttle valve 10, hydrocarbon feed valve 15, EGR control valve 17, etc. are controlled by the electronic control unit 30.

The exhaust purification catalyst 13 of the present embodiment has the function of removing NO_{X} and the function of trapping particulate matter which is contained in the exhaust gas. First, the function of the exhaust purification catalyst 13 of removing NO_{X} will be explained.

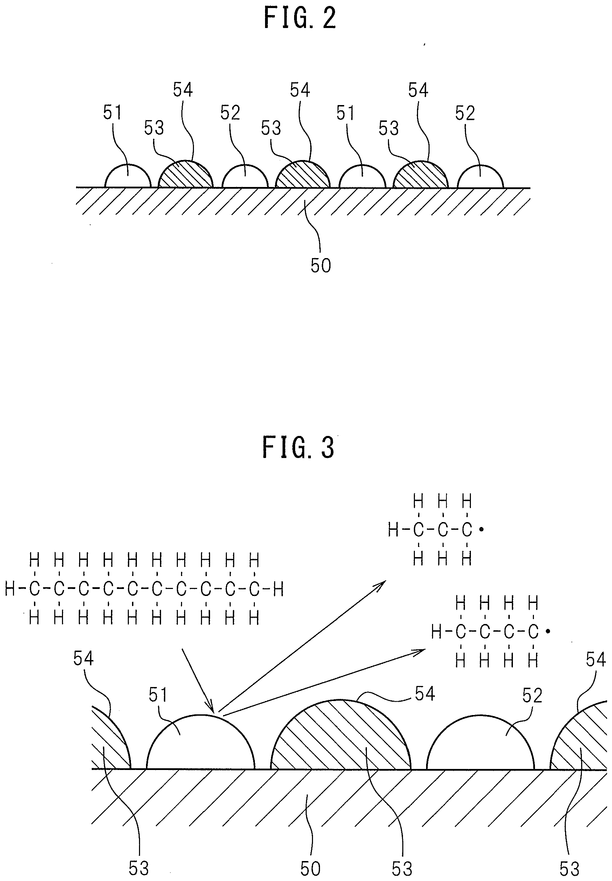

FIG. 2 schematically shows a surface part of the catalyst carrier which is carried on the substrate of the exhaust purification catalyst 13. In this exhaust purification catalyst 13, as shown in FIG. 2, precious metal catalysts 51, 52 constituted by catalyst particles are carried on a catalyst carrier 50 comprised of for example alumina. Furthermore, on the catalyst carrier 50, a basic part 53 is formed which includes at least one element selected from potassium K, sodium Na, cesium Cs, or other such alkali metal, barium Ba, calcium Ca, or other such alkali earth metal, a lanthanide and other rare earths and silver Ag, copper Cu, iron Fe, iridium Ir, and other such metals able to donate electrons to NO_{X}. The exhaust gas flows along the catalyst carrier 50, so the precious metal catalysts 51, 52 can be said to be carried on the exhaust gas flow surface of the exhaust purification catalyst 13. Further, the surface of the basic part 53 exhibits basicity, so the surface of the basic part 53 is called a "basic exhaust gas flow surface part 54".

On the other hand, in FIG. 2, the precious metal catalysts 51 are comprised of platinum Pt, while the precious metal catalysts 52 are comprised of rhodium Rh. Note that in this case, either of the precious metal catalysts 51, 52 can also be comprised of platinum Pt. Further, the catalyst carrier 50 of the exhaust purification catalyst 13 can further carry palladium Pd in addition to platinum Pt and rhodium Rh or can carry palladium Pd instead of rhodium Rh. That is, the precious metal catalysts 51, 52 which are carried on the catalyst carrier 50 are comprised of platinum Pt and at least one of rhodium Rh and palladium Pd.

If hydrocarbons are injected from the hydrocarbon feed valve 15 into the exhaust gas, the hydrocarbons are reformed at the exhaust purification catalyst 13. In the present invention, the hydrocarbons which were reformed at this time are used to remove the NO_{X} at the exhaust purification catalyst 13. FIG. 3 schematically shows the reformation action which is performed in the exhaust purification catalyst 13 at this time. As shown in FIG. 3, the hydrocarbons HC which are injected from the hydrocarbon feed valve 15 become radical state hydrocarbons HC with few carbon atoms due to the catalyst 51.

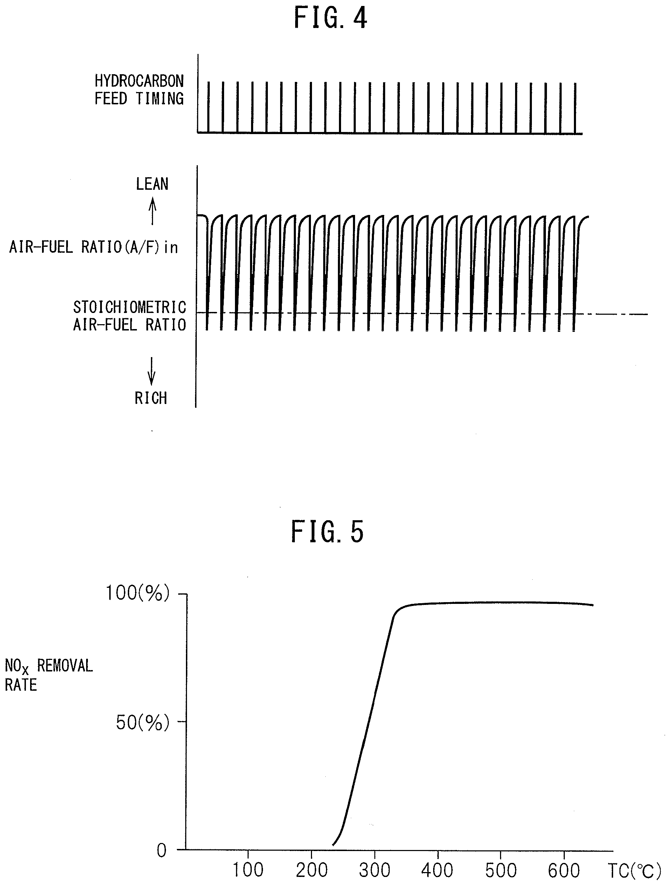

FIG. 4 shows the timing of feed of hydrocarbons from the hydrocarbon feed valve 15 and the change in the air-fuel ratio (A/F)in of the exhaust which flows into the exhaust purification catalyst 13. Note that, the change of the air-fuel ratio (A/F)in depends on the change in the concentration of hydrocarbons in the exhaust gas which flows into the exhaust purification catalyst 13, so the change in the air-fuel ratio (A/F)in which is shown in FIG. 4 can be said to express the change in the concentration of hydrocarbons. However, if the concentration of hydrocarbons becomes higher, the air-fuel ratio (A/F)in becomes smaller, so in FIG. 4, the richer the air-fuel ratio (A/F)in, the higher the concentration of hydrocarbons.

FIG. 5 shows the NOx removal rate by the exhaust purification catalyst 13 with respect to each catalyst temperature TC of the exhaust purification catalyst 13 when periodically changing the concentration of hydrocarbons which flow into the exhaust purification catalyst 13 so as to change the air-fuel ratio (A/F)in of the exhaust which flows into the exhaust purification catalyst 13 as shown in FIG. 4. The inventors engaged in extensive research on NOx removal over a long period of time and in the process of the research learned that if making the concentration of hydrocarbons which flow into the exhaust purification catalyst 13 oscillate within a predetermined range of amplitude and within a predetermined range of period, as shown in FIG. 5, an extremely high NOx removal rate is obtained even in the 400°C or higher high temperature region.

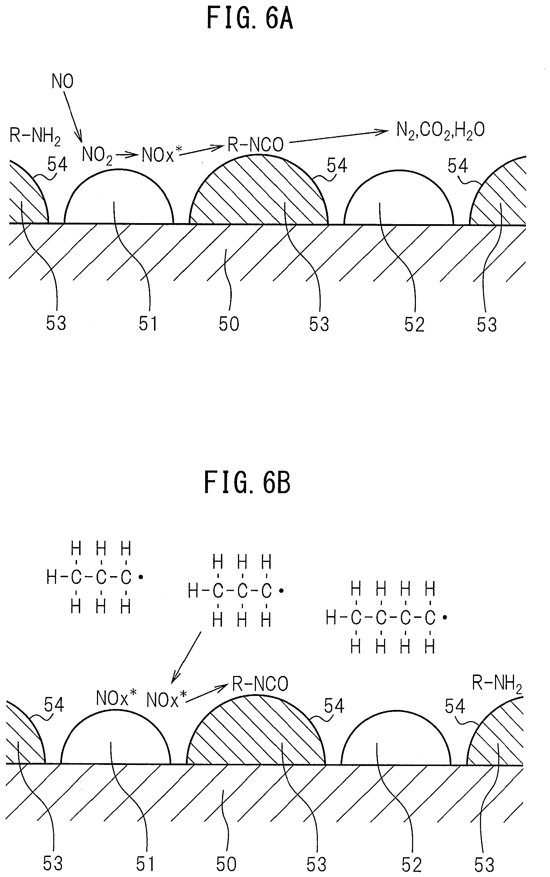

Furthermore, at this time, they learned that a large amount of reducing intermediates containing nitrogen and hydrocarbons continues to be held or adsorbed on the surface of the basic part 53, that is, on the basic exhaust gas flow surface parts 54 of the exhaust purification catalyst 13, and these reducing intermediates play a central role in obtaining a high NOx removal rate. Next, this will be explained with reference to FIG. 6A and FIG. 6B. Note that, FIG. 6A and FIG. 6B schematically show surface parts of the catalyst carrier 50 of the exhaust purification catalyst 13. FIG. 6A and FIG. 6B show the reaction which is presumed to occur when making the concentration of hydrocarbons which flow into the exhaust purification catalyst 13 oscillate within a predetermined range of amplitude and within a predetermined range of period.

FIG. 6A shows when the concentration of hydrocarbons which flows into the exhaust purification catalyst 13 is low, while FIG. 6B shows when hydrocarbons are fed from the hydrocarbon feed valve 15 and the concentration of hydrocarbons which flow into the exhaust purification catalyst 13 becomes higher.

Now, as will be understood from FIG. 4, the air-fuel ratio of the exhaust gas which flows into the exhaust purification catalyst 13 is maintained lean except for an instant, so the exhaust gas which flows into the exhaust purification catalyst 13 usually becomes an excess of oxygen. At this time, part of the NO which is contained in the exhaust gas sticks on the exhaust purification catalyst 13, part of the NO which is contained in the exhaust gas, as shown in FIG. 6A, is oxidized on the precious metal catalysts 51 of platinum and become NO₂, then this NO₂ is further oxidized and becomes NO₃. Further, part of the NO₂ becomes NO₂⁻. Therefore, NO₂⁻ and NO₃ are produced on the precious metal catalysts 51 of platinum. The NO which is deposited on the exhaust purification catalyst 13 and the NO₂⁻and NO₃ which are produced on the precious metal catalysts 51 of platinum are strong in activity. Therefore, below, these NO, NO₂⁻, and NO₃ will be called "active NO_{X}".

On the other hand, if hydrocarbons are fed from the hydrocarbon feed valve 15, the hydrocarbons are adsorbed over the entire exhaust purification catalyst 13. The majority of the adsorbed hydrocarbons successively react with the oxygen and are burned. Part of the adsorbed hydrocarbons are successively reformed inside the exhaust purification catalyst 13 and become radicals as shown in FIG. 3. Therefore, as shown in FIG. 6B, the concentration of hydrocarbons around the active NO_{X} becomes higher. In this regard, after the active NO_{X} is produced, if the state of a high concentration of oxygen around the active NO_{X} continues for a certain time period or more, the active NO_{X} will be oxidized and will be absorbed in the form of nitric acid ions NO₃⁻ inside the basic part 53. However, if the concentration of hydrocarbons around the active NO_{X} becomes higher before this certain time period elapses, as shown in FIG. 6B, the active NO_{X} will react with the radical state hydrocarbons HC on the precious metal catalysts 51 of platinum whereby the reducing intermediates will be produced. These reducing intermediates are held or adsorbed on the surface of the basic part 53.

Note that, the reducing intermediate which is first produced at this time is believed to be the nitro compound R-NO₂. This nitro compound R-NO₂ becomes the nitrile compound R-CN when produced, but this nitrile compound R-CN can only survive in that state for an instant, so immediately becomes the isocyanate compound R-NCO. This isocyanate compound R-NCO becomes the amine compound R-NH₂ if hydrolyzed. However, in this case, what is hydrolyzed is believed to be part of the isocyanate compound R-NCO. Therefore, as shown in FIG. 6B, the majority of the reducing intermediates which are held or adsorbed on the surface of the basic part 53 is believed to be the isocyanate compound R-NCO and amine compound R-NH₂.

On the other hand, when, as shown in FIG. 6B, hydrocarbons HC are adsorbed around the produced reducing intermediates, the reducing intermediates are blocked by the hydrocarbons HC and will not react further. In this case, the concentration of hydrocarbons which flow into the exhaust purification catalyst 13 falls, then the hydrocarbons which are adsorbed around the reducing intermediates are oxidized and consumed. Due to this, if the concentration of oxygen around the reducing intermediates rises, as shown in FIG. 6A, the reducing intermediates will react with the active NOₓ, react with the surrounding oxygen, or break down on their own. Due to this, the reducing intermediates R-NCO and R-NH₂ will be converted to N₂, CO₂, and H₂O and therefore the NO_{X} will be removed.

In this way, in the exhaust purification catalyst 13, the concentration of hydrocarbons which flow into the exhaust purification catalyst 13 is raised to produce reducing intermediates and the concentration of hydrocarbons which flow into the exhaust purification catalyst 13 is lowered, then, when the concentration of oxygen becomes high, the reducing intermediates are made to react with the active NOx or oxygen or self break down whereby the NOx is removed. That is, to use the exhaust purification catalyst 13 to remove the NOx, it is necessary to periodically change the concentration of hydrocarbons which flow into the exhaust purification catalyst 13.

Of course, in this case, it is necessary to raise the concentration of hydrocarbons to a concentration sufficiently high for producing the reducing intermediates. It is necessary to lower the concentration of hydrocarbons to a concentration sufficiently low for the produced reducing intermediates to be reacted with the active NOx or oxygen or to break down on their own. That is, it is necessary to make the concentration of hydrocarbons which flow into the exhaust purification catalyst 13 oscillate within a predetermined range of amplitude. Note that, in this case, it is necessary to hold the produced reducing intermediates R-NCO and R-NH₂ on the basic part 53, that is, on the basic exhaust gas flow surface parts 54, until the reducing intermediates react with the active NOx or oxygen or until they break down on their own. The basic exhaust gas flow surface parts 54 are provided for this purpose.

On the other hand, if lengthening the feed interval of hydrocarbons, the time period during which the concentration of oxygen becomes higher in the interval after hydrocarbons are fed to when hydrocarbons are next fed becomes longer and therefore the active NOx is absorbed inside the basic part 53 in the form of nitrates without producing reducing intermediates. To avoid this, it is necessary to make the concentration of hydrocarbons which flow into the exhaust purification catalyst 13 oscillate within a predetermined range of period.

Therefore, in an embodiment of the present invention, to make the NOx which is contained in the exhaust gas and the reformed hydrocarbons react to produce reducing intermediates R-NCO and R-NH₂ which contain nitrogen and hydrocarbons, precious metal catalysts 51 and 52 are carried on the exhaust gas flow surface of the exhaust purification catalyst 13. To hold the produced reducing intermediates R-NCO and R-NH₂ in the exhaust purification catalyst 13, basic exhaust gas flow surface parts 54 are formed around the precious metal catalysts 51, 52. The reducing intermediates R-NCO and R-NH₂ which are held on the basic exhaust gas flow surface part 54 are converted to N₂, CO₂, and H₂O. The oscillation period of the concentration of hydrocarbons is made the oscillation period which is necessary for continued production of the reducing intermediates R-NCO and R-NH₂. Incidentally, in the example which is shown in FIG. 4, the feed interval is made 3 seconds.

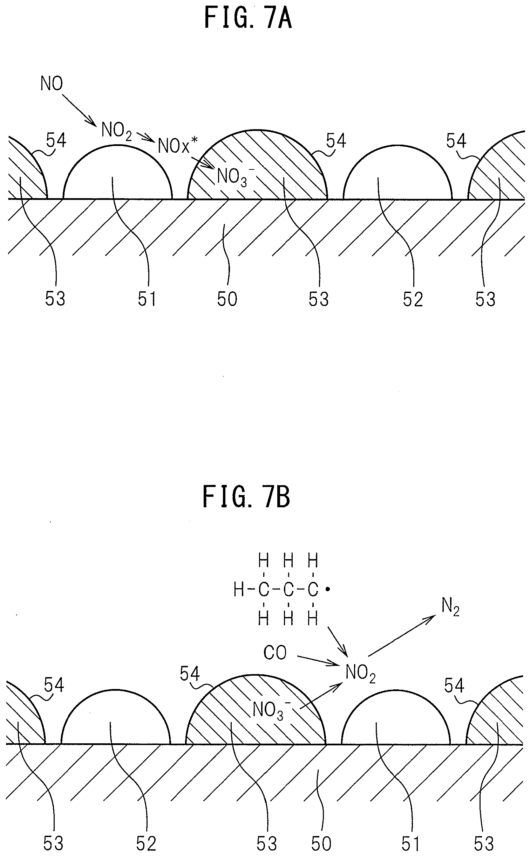

If the oscillation period of the concentration of hydrocarbons, that is, the feed interval of hydrocarbons HC, becomes longer than the above predetermined range of period, the reducing intermediates R-NCO and R-NH₂ will disappear from the surface of the basic part 53. At this time, the active NOx which is formed on the precious metal catalysts 51 of platinum Pt at this time, as shown in FIG. 7A, disperses in the form of nitric acid ions NO₃⁻ inside of the basic part 53 and become nitrates. That is, at this time, the NOx in the exhaust gas is absorbed inside the basic part 53 in the form of nitrates.

On the other hand, FIG. 7B shows the case where when, in this way, NOx is absorbed in the basic part 53 in the form of nitrates, the air-fuel ratio of the exhaust gas which flows into the exhaust purification catalyst 13 is made the stoichiometric air-fuel ratio or rich. In this case, the concentration of oxygen in the exhaust gas falls, so the reaction proceeds in the opposite direction (NO₃⁻→NO₂) and therefore the nitrates which are absorbed inside the basic part 53 successively become nitric acid ions NO₃⁻ and, as shown in FIG. 7B, are released in the form of NO₂ from the basic part 53. Next, the released NO₂ is reduced by the hydrocarbons HC and CO which are contained in the exhaust gas.

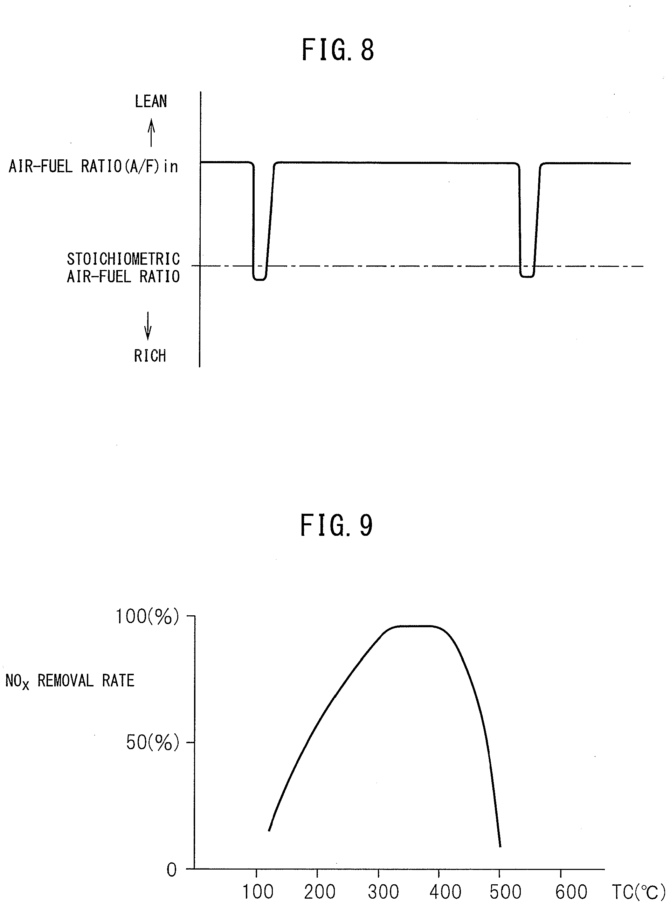

FIG. 8 shows the case of making the air-fuel ratio (A/F)in of the exhaust gas which flows into the exhaust purification catalyst 13 temporarily rich slightly before the NO_{X} absorption ability of the basic part 53 becomes saturated. Note that, in the example which is shown in FIG. 8, the time interval of this rich control is 1 minute or more. In this case, the NO_{X} which was absorbed inside the basic part 53 when the air-fuel ratio (A/F)in of the exhaust gas is lean is released all at once from the basic part 53 and reduced when the air-fuel ratio (A/F)in of the exhaust gas is made temporarily rich. Therefore, in this case, the basic part 53 performs the role of an absorbent for temporarily absorbing the NO_{X}.

Note that, at this time, sometimes the basic part 53 temporarily adsorbs the NO_{X}. Therefore, if using the term "storage" as a term including both absorption and adsorption, at this time the basic part 53 performs the role of an NO_{X} storage agent for temporarily storing the NO_{X}. That is, in this case, if referring to the ratio of the air and fuel (hydrocarbons) which are fed into the engine intake passage, combustion chambers 2, and exhaust passage upstream of the exhaust purification catalyst 13 as the "air-fuel ratio of the exhaust gas", the exhaust purification catalyst 13 functions as an NO_{X} storage catalyst which stores the NO_{X} when the air-fuel ratio of the exhaust gas is lean and releases the stored NO_{X} when the concentration of oxygen in the exhaust gas falls.

FIG. 9 shows the NO_{X} removal rate when making the exhaust purification catalyst 13 function as an NO_{X} storage catalyst in this way. Note that, the abscissa of FIG. 9 indicates the catalyst temperature TC of the exhaust purification catalyst 13. When making the exhaust purification catalyst 13 function as an NO_{X} storage catalyst, as shown in FIG. 9, when the catalyst temperature TC is from 300°C to 400°C, an extremely high NO_{X} removal rate is obtained, but if the catalyst temperature TC becomes a 400°C or more high temperature, the NO_{X} removal rate falls.

In this way, the NO_{X} removal rate falls if the catalyst temperature TC becomes 400°C or more because if the catalyst temperature TC becomes 400°C or more, nitrates break down by heat and are released in the form of NO₂ from the exhaust purification catalyst 13. That is, so long as storing NO_{X} in the form of nitrates, when the catalyst temperature TC is high, a high NO_{X} removal rate is hard to obtain. However, in the new NO_{X} removal method which is shown from FIG. 4 to FIG. 6A and FIG. 6B, as will be understood from FIG. 6A and FIG. 6B, nitrates are not produced or even if produced are extremely small in amount. Therefore, as shown in FIG. 5, even when the catalyst temperature TC is high, a high NO_{X} removal rate is obtained.

Therefore, in the present invention, a hydrocarbon feed valve 15 for feeding hydrocarbons is arranged inside the engine exhaust passage, an exhaust purification catalyst 13 for making the NO_{X} which is contained in exhaust gas and reformed hydrocarbons react is arranged downstream of the hydrocarbon feed valve 15 in the engine exhaust passage, the exhaust gas flow surface of the exhaust purification catalyst 13 carries precious metal catalysts 51, 52, and basic exhaust gas flow surface parts 54 are formed around the precious metal catalysts 51, 52. The exhaust purification catalyst 13 has the property of reducing the NO_{X} which is contained in the exhaust gas if making the concentration of hydrocarbons which flow into the exhaust purification catalyst 13 oscillate within a predetermined range of amplitude and within a predetermined range of period and has the property of the amount of storage of NOx which is contained in the exhaust gas increasing if making the oscillation period of the concentration of hydrocarbons longer than this predetermined range. At the time of engine operation, the concentration of hydrocarbons which flow into the exhaust purification catalyst 13 is made to oscillate within a predetermined range of amplitude and within a predetermined range of period so as to thereby reduce the NOx which is contained in the exhaust gas at the exhaust purification catalyst 13.

The NOx removal method which is shown from FIG. 4 to FIG. 6A and FIG. 6B can be said to be a new NOx removal method designed to remove the NOx without forming almost any nitrates when using an exhaust purification catalyst which carries precious metal catalysts and forms a basic part which can absorb the NOx. In actuality, when using this new NOx removal method, the amount of nitrates which are detected from the basic part 53 becomes extremely small compared to when making the exhaust purification catalyst 13 function as an NOx storage catalyst. Note that, this new NOx removal method will be referred to below as the "first NOx removal method".

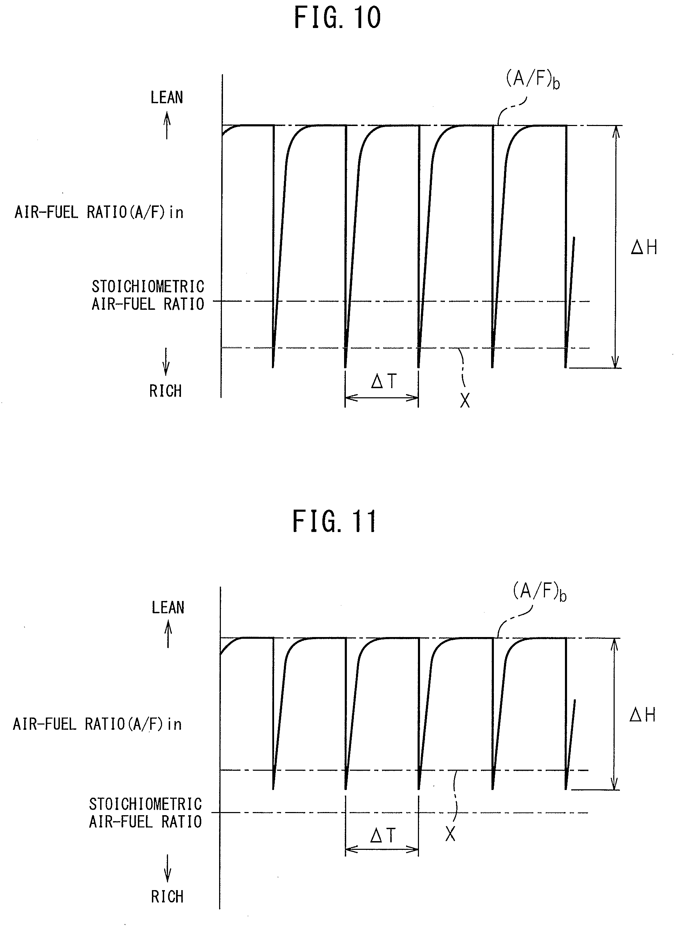

Next, this first NOx removal method will be explained in a bit more detail while referring to FIG. 10 to FIG. 15.

FIG. 10 shows the change in the air-fuel ratio (A/F)in which is shown in FIG. 4 enlarged. Note that, as explained above, the change in the air-fuel ratio (A/F)in of the exhaust gas which flows into the exhaust purification catalyst 13 simultaneously shows the change in the concentration of hydrocarbons which flow into the exhaust purification catalyst 13. Note that, in FIG. 10, ΔH shows the amplitude of the change in concentration of the hydrocarbons HC which flow into the exhaust purification catalyst 13, while ΔT shows the oscillation period of the concentration of hydrocarbons which flow into the exhaust purification catalyst 13.

Furthermore, in FIG. 10, (A/F)b expresses the base air-fuel ratio which shows the air-fuel ratio of the combustion gas for generating the engine output. In other words, this base air-fuel ratio (A/F)b expresses the air-fuel ratio of the exhaust gas which flows into the exhaust purification catalyst 13 when stopping the feed of hydrocarbons. On the other hand, in FIG. 10, X shows the upper limit of the air-fuel ratio (A/F)in which is used for production of reducing intermediates without the produced active NOx being stored in the basic part 53 in the form of nitrates. To make the active NOx and the reformed hydrocarbons react and produce reducing intermediates, it is necessary to make the air-fuel ratio (A/F)in lower than the upper limit X of the air-fuel ratio.

In other words, X of FIG. 10 expresses the lower limit of the concentration of hydrocarbons which is necessary for reacting the active NOx with the reformed hydrocarbons and producing reducing intermediates. To cause production of reducing intermediates, it is necessary to raise the concentration of hydrocarbons to above this lower limit X as well. In this case, whether reducing intermediates are produced is determined by the ratio between concentration of oxygen and the concentration of hydrocarbons around the active NOx, that is, the air-fuel ratio (A/F)in. The above-mentioned upper limit X of the air-fuel ratio which is necessary for causing production of reducing intermediates will be referred to below as the "demanded minimum air-fuel ratio".

In the example which is shown in FIG. 10, the demanded minimum air-fuel ratio X becomes rich. Therefore, in this case, to cause production of reducing intermediates, the air-fuel ratio (A/F)in is instantaneously made the demanded minimum air-fuel ratio X or less, that is, rich. As opposed to this, in the example which is shown in FIG. 11, the demanded minimum air-fuel ratio X is lean. In this case, the air-fuel ratio (A/F)in is maintained lean while periodically lowering the air-fuel ratio (A/F)in so as to produce reducing intermediates.

In this case, whether the demanded minimum air-fuel ratio X becomes rich or lean depends on the oxidizing power of the exhaust purification catalyst 13. In this case, the exhaust purification catalyst 13 for example becomes stronger in oxidizing power if increasing the amount of precious metal catalyst 51 carried and becomes stronger in oxidizing power if strengthening the acidity. Therefore, the oxidizing power of the exhaust purification catalyst 13 changes depending on the amount of the precious metal catalyst 51 carried or the strength of the acidity.

Now, when using an exhaust purification catalyst 13 with a strong oxidizing power, as shown in FIG. 11, if maintaining the air-fuel ratio (A/F)in lean while periodically lowering the air-fuel ratio (A/F)in, when the air-fuel ratio (A/F)in is lowered, the hydrocarbons end up being completely oxidized and as a result the reducing intermediates can no longer be produced. As opposed to this, when using an exhaust purification catalyst 13 with a strong oxidizing power, as shown in FIG. 10, if periodically making the air-fuel ratio (A/F)in rich, part of the hydrocarbons are partially oxidized without being completely oxidized when the air-fuel ratio (A/F)in is made rich, that is, the hydrocarbons are reformed, and therefore reducing intermediates are produced. Therefore, when using an exhaust purification catalyst 13 with a strong oxidizing power, the demanded minimum air-fuel ratio X has to be made rich.

On the other hand, when using an exhaust purification catalyst 13 with a weak oxidizing power, as shown in FIG. 11, if maintaining the air-fuel ratio (A/F)in lean while periodically lowering the air-fuel ratio (A/F)in, part of the hydrocarbons are partially oxidized without being completely oxidized, that is, the hydrocarbons are reformed, and therefore reducing intermediates are produced. As opposed to this, if using an exhaust purification catalyst 13 with a weak oxidizing power, as shown in FIG. 10, if making the air-fuel ratio (A/F)in periodically rich, a large amount of hydrocarbons is simply exhausted from the exhaust purification catalyst 13 without being oxidized and therefore the amount of hydrocarbons which is wastefully consumed increases. Therefore, when using an exhaust purification catalyst 13 with a weak oxidizing power, the demanded minimum air-fuel ratio X must be made lean.

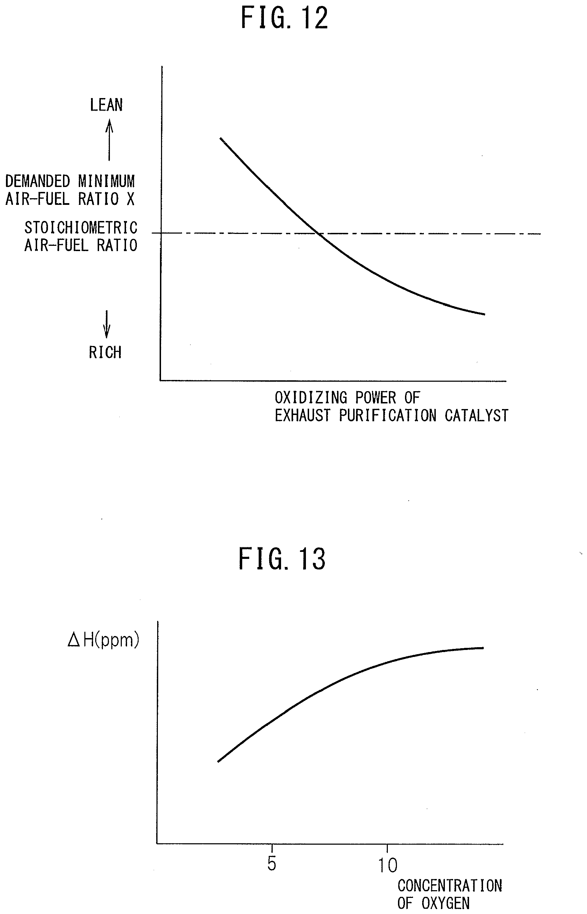

That is, it is learned that the demanded minimum air-fuel ratio X, as shown in FIG. 12, has to be lowered the stronger the oxidizing power of the exhaust purification catalyst 13. In this way, the demanded minimum air-fuel ratio X is made lean or rich by the oxidizing power of the exhaust purification catalyst 13, but below the case where the demanded minimum air-fuel ratio X is rich will be used as an example to explain the amplitude of the change in the concentration of hydrocarbons which flow into the exhaust purification catalyst 13 or the oscillation period of the concentration of hydrocarbons which flow into the exhaust purification catalyst 13.

Now then, if the base air-fuel ratio (A/F)b becomes larger, that is, if the concentration of oxygen in the exhaust before the hydrocarbons are fed becomes higher, the amount of feed of hydrocarbons required for making the air-fuel ratio (A/F)in the demanded minimum air-fuel ratio X or less increases. Along with this, the excess amount of hydrocarbons which fail to contribute to generation of reducing intermediates is increased. In this case, to remove NO_{X} well, as explained above, it is necessary to cause the excess hydrocarbons to oxidize. Therefore, to remove the NO_{X} well, the greater the amount of excess hydrocarbons, the greater the amount of oxygen which is required.

In this case, if raising the concentration of oxygen in the exhaust gas, it is possible to increase the amount of oxygen. Therefore, to remove the NO_{X} well, when the concentration of oxygen in the exhaust gas before the hydrocarbons are fed is high, it is necessary to raise the concentration of oxygen in the exhaust gas after the feed of hydrocarbons. That is, the higher the concentration of oxygen in the exhaust before hydrocarbons are fed, the larger the amplitude of the concentration of hydrocarbons has to be made.

FIG. 13 shows the relationship between the concentration of oxygen in the exhaust gas before hydrocarbons are fed and the amplitude ΔH of the concentration of hydrocarbons when the same NO_{X} removal rate is obtained. From FIG. 13, it is learned that to obtain the same NO_{X} removal rate, the higher the concentration of oxygen in the exhaust gas before hydrocarbons are fed, the more the amplitude ΔH of the concentration of hydrocarbons has to be increased. That is, to obtain the same NO_{X} removal rate, the higher the base air-fuel ratio (A/F)b, the more the amplitude ΔH of the concentration of hydrocarbons has to be increased. In other words, to remove the NO_{X} well, it is possible to reduce the amplitude ΔH of the concentration of hydrocarbons the lower the base air-fuel ratio (A/F)b becomes.

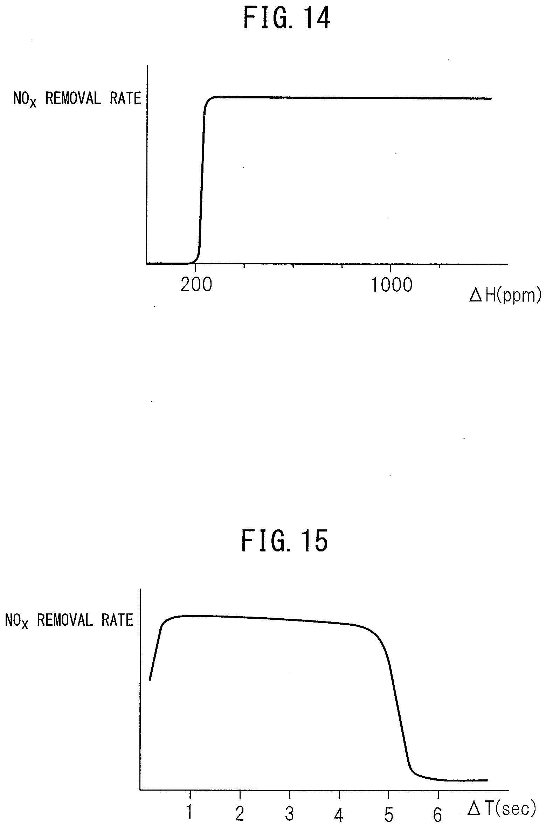

In this regard, the base air-fuel ratio (A/F)b becomes the lowest at the time of acceleration operation. At this time, if the amplitude ΔH of the concentration of hydrocarbons is 200 ppm or so, NO_{X} can be removed well. The base air-fuel ratio (A/F)b usually becomes larger than the time of acceleration operation. Therefore, as shown in FIG. 14, a good NOx removal rate can be obtained if the amplitude ΔH of the concentration of hydrocarbon is 200 ppm or more.

On the other hand, it is learned that when the base air-fuel ratio (A/F)b is the highest, if making the amplitude ΔH of the concentration of hydrocarbons 10000 ppm or so, a good NOx removal rate can be obtained. Therefore, in the present invention, the predetermined range of amplitude of the concentration of hydrocarbons is made 200 ppm to 10000 ppm.

Further, if the oscillation period ΔT of the concentration of hydrocarbons becomes longer, the interval in which the concentration of oxygen around the active NOx becomes high after hydrocarbons are fed to when hydrocarbons are next fed becomes longer. In this case, if the oscillation period ΔT of the concentration of hydrocarbons becomes longer than 5 seconds or so, the active NOx starts to be absorbed inside the basic part 53 in the form of nitrates. Therefore, as shown in FIG. 15, if the oscillation period ΔT of the concentration of hydrocarbons becomes longer than 5 seconds or so, the NOx removal rate falls. Therefore, the oscillation period ΔT of the concentration of hydrocarbons has to be made 5 seconds or less.

On the other hand, if the oscillation period ΔT of the concentration of hydrocarbons becomes about 0.3 second or less, the fed hydrocarbons start to build up on the exhaust gas flow surface of the exhaust purification catalyst 13. Therefore, as shown in FIG. 15, if the oscillation period ΔT of the concentration of hydrocarbons becomes about 0.3 second or less, the NOx removal rate falls. Therefore, in the present invention, the oscillation period of the concentration of hydrocarbons is made an interval of 0.3 second to 5 seconds.

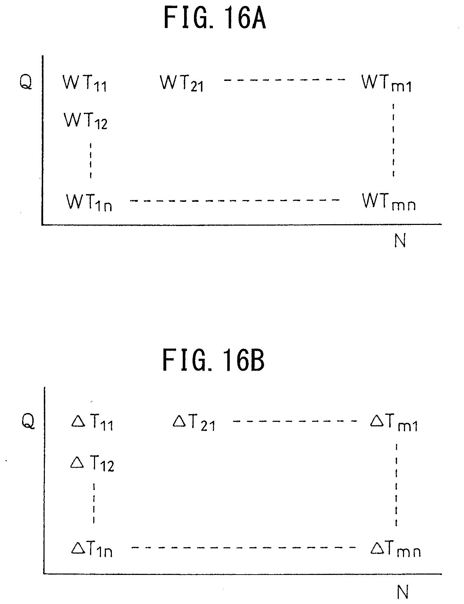

Now, in an embodiment of the present invention, control is performed to change the amount of feed and feed interval of hydrocarbons from the hydrocarbon feed valve 15 so that the amplitude ΔH and oscillation period ΔT of the concentration of hydrocarbons become the optimum values corresponding to the operating state of the engine. In this case, in an embodiment of the present invention, the amount of feed WT of hydrocarbons which can give the optimum amplitude ΔH of the concentration of hydrocarbons is stored in advance inside the ROM 32 as a function of the amount of injection Q from the fuel injectors 3 and the engine speed N in the form of a map as shown in FIG. 16A. Further, the optimum oscillation amplitude ΔT of the concentration of hydrocarbons, that is, injection interval ΔT of hydrocarbons, is similarly stored as a function of the amount of injection Q from the fuel injectors 3 and engine speed N in the form of a map such as shown in FIG. 16B in the ROM 32.

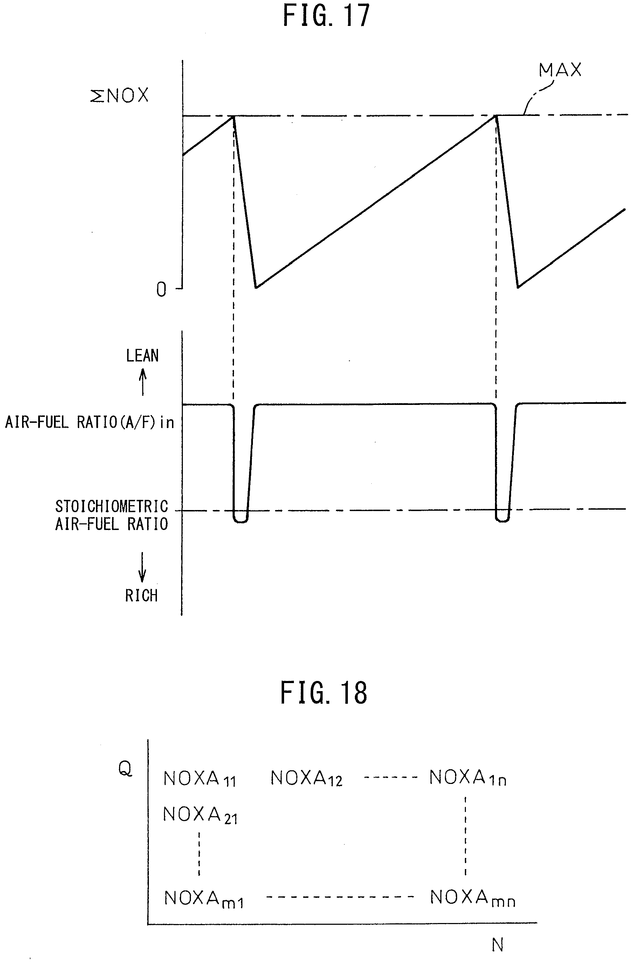

Next, referring to FIG. 17 to FIG. 20, the method of removal of NOx when making the exhaust purification catalyst 13 function as an NOx storage catalyst will be explained in detail. The method of NOx removal when making the exhaust purification catalyst 13 function as an NOx storage catalyst in this way will be referred to below as the "second NOx removal method".

In this second NOx removal method, as shown in FIG. 17, when the stored NOx amount ∑NO_{X} which is stored in the basic part 53 exceeds a predetermined allowable amount MAX, the air-fuel ratio (A/F)in of the exhaust gas which flows into the exhaust purification catalyst 13 is temporarily made rich. If the air-fuel ratio (A/F)in of the exhaust is made rich, the NOx which was stored in the basic part 53 when the air-fuel ratio (A/F)in of the exhaust was lean is released all at once from the basic part 53 and reduced. Due to this, the NOx is removed.

The stored NOx amount ∑NO_{X}, for example, is calculated from the amount of NO_{X} which is exhausted from the engine. In an embodiment according to the present invention, the exhausted NO_{X} amount NOXA which is exhausted from the engine per unit time is stored as a function of the amount of injection Q from the fuel injectors 3 and engine speed N in the form of the map such as shown in FIG. 18 in advance in the ROM 32. The stored NO_{X} amount ∑NO_{X} is calculated from this exhausted NO_{X} amount NOXA. In this case, as explained above, the period during which the air-fuel ratio (A/F)in of the exhaust is made rich is usually 1 minute or more.

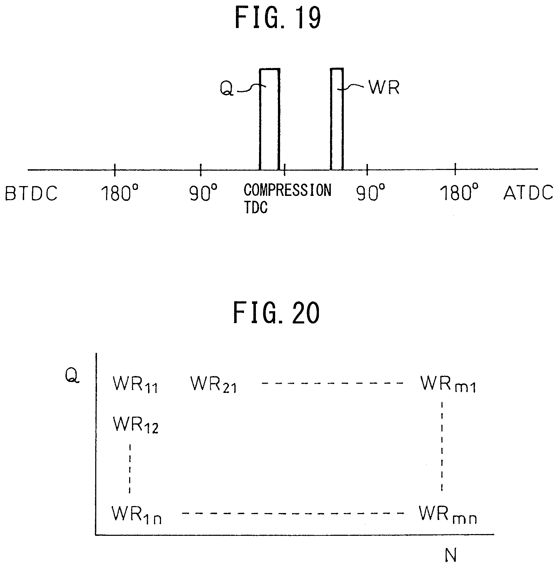

In this second NO_{X} removal method, as shown in FIG. 19, by injecting additional fuel as auxiliary injection in an amount of injection WR in addition to the amount of injection Q of the main injection of combustion use fuel into the combustion chambers 2 from the fuel injectors 3, the air-fuel ratio (A/F)in of the exhaust gas which flows into the exhaust purification catalyst 13 is made rich. Note that, in FIG. 19, the abscissa shows the crank angle. This additional fuel WR is injected at a timing where it burns, but does not become engine output, that is, slightly before ATDC90° after top dead center of compression. This amount of injection WR of the auxiliary injection is stored as a function of the amount of injection Q from the fuel injectors 3 and engine speed N in the form of the map such as shown in FIG. 20 in advance in the ROM 32. Of course, in this case, it is possible to increase the amount of feed of hydrocarbons from the hydrocarbon feed valve 15 so as to make the air-fuel ratio (A/F)in of the exhaust gas rich.

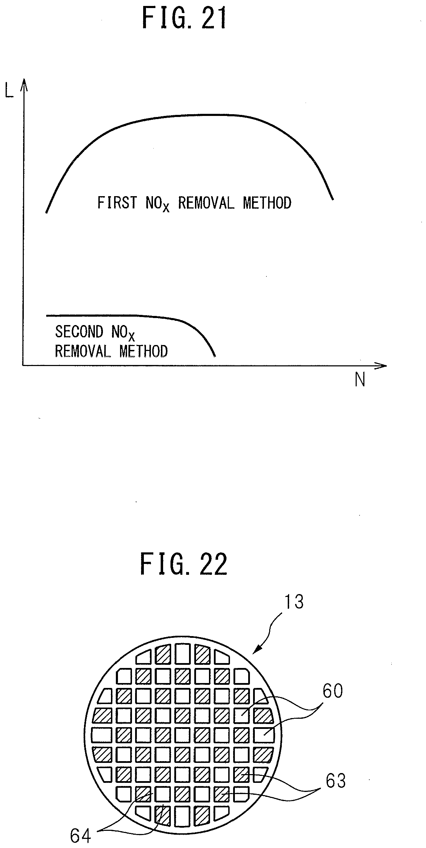

FIG. 21 shows a graph which explains the NO_{X} removal methods of the exhaust purification system of the present embodiment. The abscissa indicates the engine speed N, while the ordinate indicates the load L which corresponds to the amount of injection Q from the fuel injectors 3. FIG. 21 is a view which explains the basic NO_{X} removal methods of an exhaust purification system in the present embodiment.

In the exhaust purification system of the present embodiment, the engine speed and load are used as the basis to determine the region of use of the first NO_{X} removal method and the region of use of the second NO_{X} removal method. To use the first NO_{X} removal method to remove NO_{X} by a high removal rate, it is preferable that the exhaust purification catalyst 13 be activated. That is, to sufficiently form active NO_{X} from the NO_{X} which flows into the exhaust purification catalyst 13, partially oxidize the hydrocarbons, produce reducing intermediates, etc., it is preferable that the exhaust purification catalyst 13 be activated. The NO_{X} removal rate in the region of a low temperature of the exhaust purification catalyst 13 becomes higher in the second NO_{X} removal method than in first NO_{X} removal method. In the region of a low temperature of the exhaust purification catalyst 13, the exhaust purification catalyst 13 is not sufficiently activated, so it is preferable to remove NO_{X} from the exhaust gas by storing NO_{X}.

In the exhaust purification system of the present embodiment, in the region of a small load and further a small engine speed, the second NO_{X} removal method is employed, while in other regions, the first NO_{X} removal method is employed. In this way, the NO_{X} removal method where the NO_{X} removal rate becomes higher among the first NO_{X} removal method and second NO_{X} removal method is selected in accordance with the operating state of the internal combustion engine.

Next, the function of the exhaust purification catalyst 13 of removing the particulate matter will be explained. The exhaust purification catalyst 13 of the present embodiment has a structure in which precious metal catalysts and basic parts for removing NO_{X} are formed at the particulate filter.

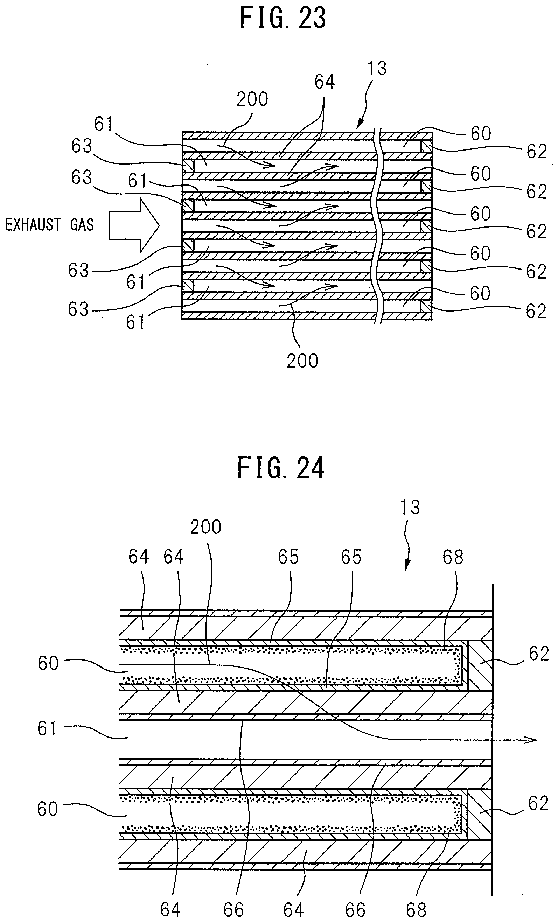

FIG. 22 shows a schematic front view of the exhaust purification catalyst in the present embodiment. FIG. 23 shows a schematic cross-sectional view when cutting the exhaust purification catalyst in the present embodiment along a direction of extension of the passages. The exhaust purification catalyst 13 of the present embodiment has not only the function of removing NOₓ, but also the function as a particulate filter which traps particulate matter. The exhaust purification catalyst 13 of the present embodiment removes the carbon particulate or other particulate matter which is contained in the exhaust gas.

The exhaust purification catalyst 13 in the present embodiment has a honeycomb structure. The exhaust purification catalyst 13 has a plurality of the inflow side passages 60 and outflow side passages 61 which extend along the direction of flow of exhaust gas. The inflow side passages 60 are passages by which exhaust gas flows into the exhaust purification catalyst 13. The outflow side passages 61 are passages by which exhaust gas flows out from the exhaust purification catalyst 13. The inflow side passages 60 are closed at their downstream ends by stoppers 62. The outflow side passages 61 are closed at their upstream ends by stoppers 63. In FIG. 22, the stopper 63 parts are hatched. The substrate of the exhaust purification catalyst 13 includes partition wall parts 64. The inflow side passages 60 and the outflow side passages 61 are separated by partition wall parts 64. Therefore, the surfaces of the partition wall parts 64 form the wall surfaces of the inflow side passages 60 and the wall surfaces of the outflow side passages 61.

The substrate of the exhaust purification catalyst 13 is, for example, formed from a porous material such as cordierite. The inflow side passages 60 are surrounded by the outflow side passages 61 through the partition wall parts 64. The exhaust gas which flows into the inflow side passages 60, as shown by the arrow 200, passes through the insides of the partition wall parts 64 and flows out to the adjoining outflow side passages 61. When the exhaust gas passes through the partition wall parts 64, the particulate matter is trapped. The exhaust gas passes through the outflow side passages 61 and flows out from the exhaust purification catalyst 13. The particulate matter which is trapped by the exhaust purification catalyst 13 is deposited.

Referring to FIG. 1, in the exhaust purification catalyst 13 of the present embodiment, a differential pressure sensor 24 is attached for detecting the differential pressure before and after the exhaust purification catalyst 13. The output signal of the differential pressure sensor 24 is input through a corresponding AD converter 37 to the input port 35. The amount of deposition of particulate matter which deposits at the exhaust purification catalyst 13 can, for example, be estimated by the output of the differential pressure sensor 24. When the differential pressure before and after the exhaust purification catalyst 13 reaches a predetermined judgment value, it can be judged that the amount of deposition of particulate matter has reached the limit of the allowable value. When the amount of deposition of particulate matter has reached the limit of the allowable value, the control for regeneration which removes the particulate matter by raising the temperature in an air excess atmosphere can be performed.

FIG. 24 shows an enlarged schematic cross-sectional view of an exhaust purification catalyst in the embodiment. FIG. 24 is an enlarged schematic cross-sectional view near the outlet of the exhaust purification catalyst. In the exhaust purification catalyst 13 of the present embodiment, the wall surfaces of the inflow side passages 60 have the coated parts 65 formed on them. That is, the coated parts 65 are formed at the surfaces of the partition wall parts 64 at the inflow side passage 60 sides. Further, coated parts 66 are formed at the wall surfaces of the outflow side passages 61. That is, the coated parts 66 are formed at the surfaces of the partition wall parts 64 at the outflow side passage 61 sides. Here, the coated parts 65 and 66 may be formed at not only parts of the surfaces of the partition wall parts 64, but also the insides of the partition wall parts 64.

In the first exhaust purification catalyst of the present embodiment, the coated parts 65 which are arranged at the inflow side passages 60 and the coated parts 66 which are arranged the outflow side passages 61 include a catalyst carrier 50. The catalyst carrier 50 carries the precious metal catalysts 51 and 52 and the basic parts 53.

The coated parts 66 which are arranged at the wall surfaces of the outflow side passages 61, as shown in FIG. 2, have the precious metal catalysts 51 and 52 and the basic parts 53. The precious metal catalysts 51 and 52 and the basic parts 53 are arranged in proximity to each other.

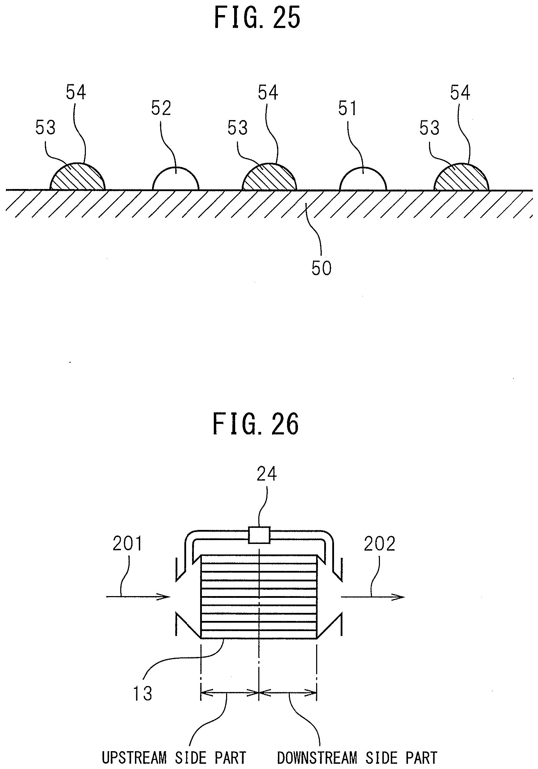

FIG. 25 shows an enlarged schematic cross-sectional view of the surface of the catalyst carrier of the coated parts of an inflow side passage of the first exhaust purification catalyst. The coated parts 65 which are arranged at the inflow side passages 60 also have the precious metal catalysts 51 and 52 and the basic parts 53 arranged at them. They are formed so that the density of the basic parts 53 which are arranged at the inflow side passages 60 becomes smaller than the density of the basic parts 53 which are arranged at the outflow side passage 61.

Referring to FIG. 24, when continuing the operation of the internal combustion engine, particulate matter 68 will deposit at the inflow side passages 60. The particulate matter 68 is promoted in oxidation by the catalytic actions of the precious metal catalysts 51 and 52 which are arranged at the coated parts 65. The particulate matter 68 which is not oxidized deposits inside of the inflow side passages 60. When the amount of deposition of the particulate matter 68 exceeds a predetermined allowable value, control for regeneration is performed to remove the particulate matter 68.

On the other hand, the NO_{X} which is contained in the exhaust gas which flows into the exhaust purification catalyst 13 can be removed by the first NO_{X} removal method or the second NO_{X} removal method. In the present embodiment, the first exhaust purification catalyst 13 is formed with the coated parts 65 and 66 which include the precious metal catalysts 51 and 52 and the basic parts 53 at both the wall surfaces of the inflow side passages 60 and the wall surfaces of the outflow side passages 61. When exhaust gas runs through the inflow side passages 60 and the outflow side passages 61, the NO_{X} can be removed. Alternatively, the NO_{X} is removed when the exhaust gas passes through the partition wall parts 64.

The exhaust purification catalyst 13 of the present embodiment is a wall flow type exhaust purification catalyst in which the exhaust gas runs through the insides of the partition wall parts 64. Since the exhaust gas runs through the partition wall parts 64, the path of exhaust gas inside of the exhaust purification catalyst can be lengthened. Since the path at the exhaust purification catalyst 13 becomes longer, the flow rate when the exhaust gas flows through the inside of the exhaust purification catalyst 13 becomes slower. For this reason, the reaction time between the NO_{X} which is contained in the exhaust gas and the catalyst or the reaction time between the NO_{X} and the reducing intermediates etc. can be lengthened.

Furthermore, since the flow rate of exhaust gas which flows through the inside of the exhaust purification catalyst 13 becomes slower, the exhaust gas more easily disperses inside of the passages and the reaction more easily occurs. For this reason, the NO_{X} removal rate can be improved. Alternatively, when obtaining the same NO_{X} removal rate, the coated parts can be made thinner in thickness. Furthermore, if making the coated parts thinner in thickness, the flow cross-sectional area of the passages of the exhaust gas becomes larger, so the flow rate can be lowered further.

In particular, the reducing intermediates which are produced in the case of using the first NO_{X} removal method include ones with relatively long reaction times with NO_{X}. In an exhaust purification catalyst where the exhaust gas does not pass through the partition wall parts but proceeds straight in the passages, the contact time between the NO_{X} which is contained in the exhaust gas and the reducing intermediates becomes shorter. As opposed to this, the exhaust purification catalyst of the present embodiment can make the contact time between the NO_{X} and the reducing intermediates longer and can improve the NO_{X} removal rate. For this reason, even in the operating state of an internal combustion engine with a high flow rate of exhaust gas, that is, in the operating state of the internal combustion engine with a high spatial velocity in an exhaust purification catalyst, a high NO_{X} removal rate can be obtained. For example, even in an operating state with a high load and a high engine speed, the NO_{X} can be removed by a high NO_{X} removal rate.

On the other hand, in an operating state of the internal combustion engine with a smaller spatial velocity in the exhaust purification catalyst 13, sometimes the feed amount of hydrocarbons which are fed from the hydrocarbon feed valve 15 is limited. For example, to suppress deterioration of the fuel economy, sometimes the feed amount of hydrocarbons from the hydrocarbon feed valve is limited based on the amount of injection of fuel which is injected into a combustion chamber 2. That is, sometimes the feed amount of hydrocarbons from the hydrocarbon feed valve is limited so as to become less than a predetermined ratio with respect to the amount of fuel which is injected into a combustion chamber. As a result, the feed amount of hydrocarbons from the hydrocarbon feed valve 15 becomes smaller.

As the operating state of the internal combustion engine where the spatial velocity at the exhaust purification catalyst 13 becomes small, the case of maintaining the engine speed at a low state and performing constant speed operation or the idling operation state may be illustrated.

In an operating state where the feed amount of hydrocarbons from the hydrocarbon feed valve 15 is limited in this way, the amplitude of the concentration of hydrocarbons of the exhaust gas which flows into the exhaust purification catalyst 13 becomes smaller and the NO_{X} removal rate falls. However, in the exhaust purification catalyst in the present embodiment, the reaction time can be made longer, so it is possible to suppress the drop in NO_{X} removal rate.

Further, when NO_{X} is being removed by the first NO_{X} removal method, if hydrocarbons are fed from the hydrocarbon feed valve 15, the hydrocarbons are adsorbed at the exhaust purification catalyst. The hydrocarbons which are adsorbed at the exhaust purification catalyst 13 react with the active NO_{X} as explained above whereby reducing intermediates are produced. To remove NO_{X} well by the first NO_{X} removal method, it is preferable to produce as much reducing intermediates as possible. The reducing intermediates are produced from radical state hydrocarbons, while the radical state hydrocarbons are produced from the hydrocarbons which are adsorbed at the exhaust purification catalyst. For this reason, to increase the amount of production of the reducing intermediates, it is preferable that a large amount of hydrocarbons be made to be adsorbed at the exhaust purification catalyst 13.

The exhaust purification catalyst of the present embodiment is closed at end parts of the inflow side passages, so the exhaust gas passes through the partition wall parts. For this reason, the exhaust purification catalyst 13 of the present embodiment has the property of a high ability to adsorb hydrocarbons. The exhaust purification catalyst 13 can hold a large amount of hydrocarbons by adsorption when hydrocarbons are fed from the hydrocarbon feed valve 15. For this reason, for example, even if the amplitude of concentration of hydrocarbons of exhaust gas which flows into the exhaust purification catalyst becomes small, a drop in the NO_{X} removal rate can be suppressed.

In this way, in the exhaust purification catalyst of the present embodiment, it is possible to suppress the drop in NO_{X} removal rate in an operating state where the spatial velocity of the exhaust gas becomes low or an operating state where the spatial velocity becomes high.

Referring to FIG. 2 and FIG. 25, the first exhaust purification catalyst 13 of the present embodiment differs in the configuration of the coated parts 65 which are arranged at the wall surfaces of the inflow side passages 60 and the configuration of the coated parts 66 which are arranged at the wall surfaces of the outflow side passages 61. The first exhaust purification catalyst 13 is formed so that the weight of the basic parts 53 per unit volume of the coated parts 65 of the inflow side passages 60 becomes smaller than the weight of the basic parts 53 per unit volume of the coated parts 66 of the outflow side passages 61. The basic parts 53 of the coated parts 65 of the inflow side passages 60 are arranged further away from the precious metal catalysts 51 and 52 than the basic parts 53 of the coated parts 65 of the outflow side passages 61.

Referring to FIG. 24, the particulate matter 68 builds up at the inflow side passages 60 and is further burned by oxidation. At this time, due to the catalytic action of the precious metal catalyst 51, oxidation of the particulate matter 68 is promoted. In this regard, if a large amount of basic parts 53 are arranged near the precious metal catalyst 51, the catalytic action of oxidation by the precious metal catalyst 51 ends up falling.

In the first exhaust purification catalyst 13 of the present embodiment, the density of the basic parts 53 at the coated parts 66 of the inflow side passages 60 is made smaller than the density of the basic parts 53 at the coated parts 65 of the outflow side passages 61. By making the weight per unit volume of the basic parts at the coated parts smaller, it is possible to reduce the basicity at the coated parts. The basicity at the coated parts 66 of the inflow side passages 60 becomes weaker than the basicity at the coated parts 65 of the outflow side passages 61. As a result, the oxidizing ability at the coated parts 65 of the inflow side passages 60 becomes higher than the oxidizing ability at the coated parts 55 at the outflow side passages 61. A drop in the oxidizing ability of the precious metal catalyst 51 at the coated parts 65 of the inflow side passages 60 is suppressed. In the inflow side passages 60, it is possible to maintain the oxidation function of the precious metal catalyst 51 high and possible to oxidize the particulate matter well.

On the other hand, in the outflow side passages 61, when activating NO_{X} in the first NO_{X} removal method, it is possible to activate the NO_{X} or radicalize the hydrocarbons by a lower oxidation function than the oxidation function for oxidizing particulate matter at the inflow side passage 60. In the first NO_{X} removal method, the basic parts 53 have the functions of holding active NO_{X} or holding reducing intermediates. Further, in the second NO_{X} removal method, the basic parts 53 have the function of storing NO_{X} inside them. For this reason, in the coated parts 66 of the outflow side passages 61 which mainly remove NOₓ, it is preferable to increase the weight of the basic parts 53 per unit volume. For example, it is preferable to arrange the basic parts 53 by a higher density than the coated parts 65 of the inflow side passages 60. By adopting this configuration, the basicity of the coated parts 66 becomes stronger and the holding force of active NO_{X} etc. at the first NO_{X} removal method can be made larger to raise the NO_{X} removal rate.

In this way, the precious metal catalysts and the basic parts of the exhaust purification catalyst are preferably arranged so that the basicity of the coated parts of the inflow side passages becomes weaker than the basicity of the coated parts of the outflow side passages. By adopting this configuration, at the inflow side passages, it is possible to suppress the drop in the oxidizing ability of the precious metal catalyst and efficiently oxidize the particulate matter. Further, it is possible to efficiently remove NO_{X} at the outflow side passages.

The configuration where the oxidizing ability at the coated parts 65 of the inflow side passages 60 becomes higher than the oxidizing ability at the coated parts 66 of the outflow side passages 61 is not particularly limited. For example, the carried amount of precious metal catalyst per unit volume in the coated parts 65 of the inflow side passages 60 may be made greater than the carried amount of precious metal catalyst per unit volume in the coated parts 66 of the outflow side passages 61.

Next, the method of production of the first exhaust purification catalyst in the present embodiment will be explained. As the method of production for making the configuration of coated parts 65 at the inflow side passages 60 and the configuration of coated parts 66 at the outflow side passages 61 different from each other, for example, the powder carrying method can be employed. The powder carrying method is the method of forming the basic parts on the catalyst carrier in advance before placing the catalyst carrier on the substrate.

For example, in the powder carrying method for producing an exhaust purification catalyst where the basic parts are comprised of barium, barium acetate is dissolved in distilled water and stirred with a powder of the catalyst carrier of alumina. After this, it is possible to dry and solidify the catalyst carrier and further calcine it to form a catalyst carrier on which basic parts of barium are formed.

Such a catalyst carrier is produced in advance. A paste-like liquid which contains the catalyst carrier is run from one of the opening parts at the inflow side of the base material or the opening parts of the outflow side and sucked out from the other. The entire wall surfaces of the inflow side passages or the outflow side passages may have the catalyst carrier arranged at them to form the coated parts. In this powder carrying method, it is possible to freely change the amount of the basic parts which are carried at the catalyst carrier made in advance. It is possible to form the coated parts separately at the wall surfaces of the inflow side passages and the wall surfaces of the outflow side passages separate to thereby make the configuration of the coated parts at the inflow side passages and the configuration of the coated parts at the outflow side passages different from each other. Further, it is possible to form the coated parts at only the surface parts of the partition walls. Further, by employing the powder carrying method, the basic parts can be carried at a high density.

The first exhaust purification catalyst in the present embodiment has basic parts arranged at the coated parts of the inflow side passages and the coated part of the outflow side passage, but the invention is not limited to this. It is also possible to not have the basic parts arranged at the coated parts of the inflow side passages but have the basic parts arranged at the coated parts of the outflow side passages. That is, it is also possible to make the carried amount of the basic parts at the coated parts of the inflow side passages zero and form the basic parts at the coated parts of the outflow side passages. In this configuration as well, the basicity at the coated parts of the inflow side passages can be made weaker than the basicity at the coated parts of the outflow side passages. Alternatively, the oxidizing ability at the coated parts of the inflow side passages can be made higher than the oxidizing ability at the coated parts of the outflow side passages.

The first exhaust purification catalyst in the present embodiment differs in weight per unit volume of the basic parts between the coated parts of the inflow side passages and the coated parts of the outflow side passages, but the invention is not limited to this. The configuration of the coated parts of the inflow side passages and the configuration of the coated parts of the outflow side passages may also be made the same as each other. In this exhaust purification catalyst as well, it is possible to slow the flow rate of exhaust gas at the inside of the exhaust purification catalyst and possible to improve the NO_{X} removal rate. This exhaust purification catalyst can also be produced by, in addition to the above powder carrying method, the water absorption carrying method of placing the coated parts on the substrate in advance, then dipping the substrate in a solution of barium etc.

Note that, in the prior art as well, an NO_{X} storage catalyst which carried precious metal catalysts and basic parts at a particulate filter to remove NO_{X} was known. An NO_{X} storage catalyst is a device which uses only the second NO_{X} removal method in the present embodiment. An NO_{X} storage catalyst which has the function of a particulate filter preferably has a large number basic parts arranged at it to enable a large amount of NO_{X} to be stored. In this regard, if arranging a large amount of a storage agent in the passages of the exhaust purification catalyst, the precious metal catalyst falls in oxidation performance. Further, the pressure loss at the NO_{X} storage catalyst becomes greater and the back pressure rises. For this reason, there is the problem that it is difficult to arrange a large number of basic parts.

As opposed to this, in the first NO_{X} removal method of the present embodiment , it is possible to remove the NO_{X} by a weaker oxidizing ability than the NO_{X} storage catalyst. For this reason, in an exhaust purification catalyst which performs the first NO_{X} removal method, it is possible to hold the basic parts at a high density near the precious metal catalysts.

In the present embodiment, the coated parts 65 and 66 are formed at the surfaces of the partition wall parts 64, but the invention is not limited to this. The basic parts and precious metal catalysts may also be arranged at the insides of the partition wall parts 64. In this case, in addition to when the exhaust gas passes through the inflow side passages and when it passes through the outflow side passages, NO_{X} can be removed when it passes through the insides of the partition wall parts 64.

FIG. 26 shows a schematic view of a second exhaust purification catalyst in the present embodiment. The exhaust gas flows into the exhaust purification catalyst 13 as shown by the arrow 201 and flows out from exhaust purification catalyst 13 as shown by the arrow 202. The second exhaust purification catalyst 13 is divided into an upstream side part and a downstream side part along the direction of extension of the passages of the exhaust gas. In the example which is shown in FIG. 26, the region is divided at the substantial center in the direction of extension of the passages of the exhaust purification catalyst. The second exhaust purification catalyst 13 of the present embodiment carries a promoter which has an oxygen storage ability at the downstream side part.

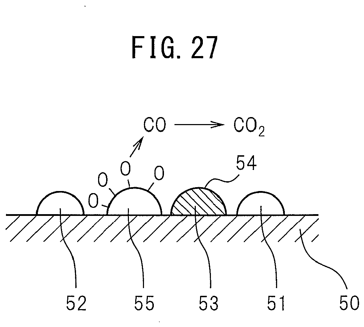

FIG. 27 shows an enlarged schematic cross-sectional view of the surface of the catalyst carrier which is arranged at the downstream side part of the second exhaust purification catalyst in the present embodiment. At the downstream side part, a promoter 55 which has an oxygen storage ability is arranged at the surface of the catalyst carrier 50 in addition to the precious metal catalysts 51 and 52. In the present embodiment, the promoter 55 is arranged at both of the coated parts 65 of the inflow side passages 60 and the coated parts 66 of the outflow side passages 61, but the invention is not limited to this. The promoter may also be arranged at either one of the coated parts of the inflow side passages and the coated parts of the outflow side passages.

The promoter 55 in the present embodiment is comprised of metal particles of cerium oxide (ceria). The promoter 55 holds oxygen in an oxygen excess atmosphere, while releases oxygen in an oxygen deficient atmosphere. By the arrangement of a promoter 55 which has an oxygen storage ability, when the exhaust gas has a large oxygen concentration, it is possible to hold the oxygen which is contained in the exhaust gas and feed the oxygen when the exhaust gas becomes smaller in oxygen concentration.

If using the first NO_{X} removal method in the exhaust purification catalyst of the present embodiment, the inflowing hydrocarbons are partially oxidized and radical state hydrocarbons are formed. In this regard, part of the hydrocarbons which are contained in the exhaust gas sometimes are further oxidized and become carbon monoxide CO. In the exhaust purification catalyst 13 of the present embodiment, as explained above, the exhaust gas passes through the partition wall parts 64 and the reaction time can be made longer. In this regard, since the reaction time is long, the oxidation of hydrocarbons proceeds. The reaction does not stop with partial oxidation and sometimes the carbon monoxide is produced.

In the second exhaust purification catalyst 13 of the present embodiment, even when carbon monoxide is produced inside of the exhaust purification catalyst, the carbon monoxide can be oxidized by the feed of oxygen at the downstream side part. Carbon monoxide can be further oxidized to carbon dioxide. It is possible to cause outflow from the exhaust purification catalyst 13 in the state of carbon dioxide.

In particular, when feeding hydrocarbons from the hydrocarbon feed valve 15, oxygen becomes locally insufficient at the inside of the exhaust purification catalyst 13 and, in the state where the catalyst temperature is a high temperature and the activity is high, sometimes the oxidation reaction of the hydrocarbon proceeds and the amount of production of carbon monoxide increases. However, at the downstream side part, oxygen is fed from the promoter 55 and carbon monoxide can be converted to carbon dioxide. For this reason, the outflow of carbon monoxide from the exhaust purification catalyst 13 can be suppressed.

In this regard, if a promoter which has an oxygen storage ability is arranged at the upstream side part, when feeding hydrocarbons, oxygen is supplied from the promoter and the amplitude of the concentration of hydrocarbons becomes smaller. For this reason, formation of the reducing intermediates is sometimes suppressed. In the second exhaust purification catalyst of the present embodiment, a promoter which has an oxygen storage ability is not arranged at the upstream side part. For this reason, at the upstream side part, it is possible to increase the amplitude of concentration of hydrocarbons and possible to efficiently produce the reducing intermediates.

In the second exhaust purification catalyst of the present embodiment, the substrate is divided substantially equally in the direction of extension of the passages so as to thereby define an upstream side part and downstream side part, but the invention is not limited to this. The boundary between the upstream side part and the downstream side part can be set at any position.

Next, operational control of the exhaust purification system of internal combustion engine in the present embodiment will be explained. The exhaust purification catalyst of the present embodiment is configured as a particulate filter and NO_{X} storage catalyst formed integrally. For this reason, in a predetermined operating state, the exhaust purification catalyst is liable to rise in temperature and become excessively hot. That is, in a predetermined operating state, the temperature of the exhaust purification catalyst is liable to end up exceeding the allowable temperature. The exhaust purification system in the present embodiment performs control to keep the exhaust purification catalyst from becoming excessively hot.

In the first NO_{X} removal method, in an operating state of the internal combustion engine where the amount of NO_{X} which flows out from a combustion chamber 2 becomes greater, a large amount of hydrocarbons are fed from the hydrocarbon feed valve 15. As an operating state where the NO_{X} which flows out from the combustion chamber 2 becomes greater, it is possible to illustrate the operating state where the load is high and the engine speed is high. Sometimes the flow rate of exhaust gas rapidly becomes smaller from such an operating state. For example, when the load and the engine speed rapidly are decreased, the flow rate of exhaust gas which flows into the exhaust purification catalyst 13 rapidly becomes smaller.

If the flow rate of exhaust gas rapidly falls from the state of a large feed amount of hydrocarbons from the hydrocarbon feed valve 15, the amount of removal of heat of the exhaust purification catalyst 13 by the exhaust gas becomes smaller. For this reason, sometimes the exhaust purification catalyst 13 rapidly rises in temperature and becomes excessively hot. Furthermore, sometimes the hydrocarbons which are adsorbed at the exhaust purification catalyst 13 undergo an oxidation reaction whereby the exhaust purification catalyst 13 rapidly rises in temperature.

In the first operational control of the exhaust purification system of the present embodiment, when detecting that the flow rate of exhaust gas has rapidly fallen from the state of a large feed amount of hydrocarbons fed to the exhaust purification catalyst 13, the feed amount of hydrocarbons by the first NO_{X} removal method is reduced. That is, control is performed to reduce the feed amount of hydrocarbons fed by within a predetermined range of amplitude and by within a predetermined range of period. In the present embodiment, control is performed to make the feed of hydrocarbons for performing the first NO_{X} removal method zero. That is, control is performed to prohibit the feed of hydrocarbons.

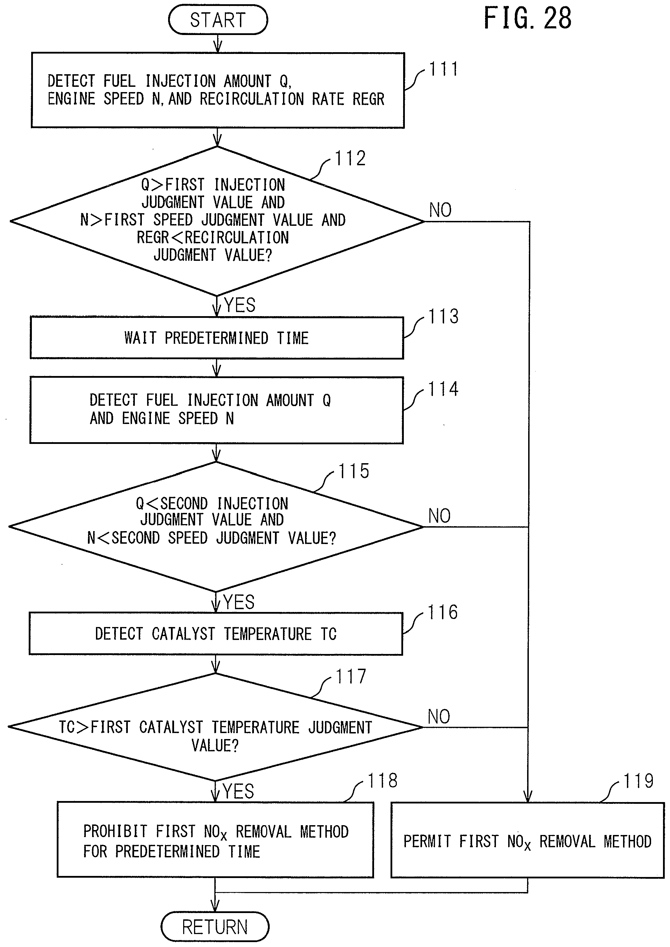

FIG. 28 shows a flow chart of first operational control of the exhaust purification system in the present embodiment. The operational control of FIG. 28 can, for example, be repeated every predetermined time interval.

At step 111, the fuel injection amount Q at the combustion chamber, the engine speed N, and the recirculation rate REGR are detected.

Next, at step 112, it is judged if operating state is one where the feed amount of hydrocarbons from the hydrocarbon feed valve 15 is large. Alternatively, it is judged if the state is one where the amount of NO_{X} which flows out from the engine body is large. In the present embodiment, the fuel injection amount Q at the combustion chamber, the engine speed N, and the EGR rate REGR are used for judgment.

At step 112, it is judged if the fuel injection amount Q is larger than the first injection amount judgment value. It is judged if the engine speed N is larger than the first speed judgment value. Furthermore, it is judged if the recirculation rate REGR is smaller than the recirculation rate judgment value. The respective judgment values can be set in advance. When, at step 112, all of the fuel injection amount Q, the engine speed N, and recirculation rate REGR satisfy the respective judgment conditions, the routine proceeds to step 113. In this case, it can be judged that the state is one where feed amount of hydrocarbons from the hydrocarbon feed valve 15 is larger than a predetermined amount. Alternatively, it can be judged that the amount of NO_{X} which flows out from the engine body is larger than a predetermined amount.

At step 112, when one or more judgment conditions among the plurality of judgment conditions is not satisfied, the routine proceeds to step 119. In this case, it can be judged that the feed amount of hydrocarbons from the hydrocarbon feed valve 15 is the predetermined amount or less. For example, even in a high load operating state where the engine speed is high and the fuel injection amount at the combustion chamber 2 is large, when the recirculation rate is high, the amount of NO_{X} which flows out from the combustion chamber 2 becomes smaller. For this reason, the amount of hydrocarbons which are fed from the hydrocarbon feed valve 15 also becomes smaller. In such a case, the routine proceeds to step 119.

At step 119, control can be performed to allow the first NO_{X} removal method. When the first NO_{X} removal method is already being used to remove NOₓ, the first NO_{X} removal method can be continued.

At step 113, the system stands by for a predetermined time to estimate the rate of change of the flow rate of exhaust gas (rate of change of spatial speed at exhaust purification catalyst) at latter step. At step 114, the fuel injection amount Q and the engine speed N after the elapse of a predetermined time are detected.

Next, at step 115, it is judged if the flow rate of exhaust gas has rapidly fallen. That is, it is judged if the rate of change of the flow rate of exhaust gas (corresponding to rate of change of spatial velocity in exhaust purification catalyst) has become a negative value of a large absolute value. It is judged if the fuel injection amount Q is smaller than a second injection judgment value. Furthermore, it is judged if the engine speed N is smaller than a second speed judgment value. The second injection judgment value can be set in advance to a value smaller than the first injection judgment value. Further, the second speed judgment value can be set in advance to a value smaller than the first speed judgment value.

At step 115, when one or more of the fuel injection amount Q and the engine speed N do not satisfy the judgment conditions, the routine proceeds to step 119. That is, when one or more of the fuel injection amount Q and the engine speed N are the judgment values or more, the routine proceeds to step 119. In this case, it is possible to judge that the rate of fall of the flow rate of exhaust gas is small and the exhaust purification catalyst will not become excessively hot.

When, at step 115, both the fuel injection amount Q and the engine speed N are smaller than the respective judgment values, it can be judged that the rate of change of the flow rate of exhaust gas is less than a predetermined judgment value. That is, it is possible to judge that the flow rate of exhaust gas has rapidly fallen. In this case, the routine proceeds to step 116.

In this regard, even when the flow rate of exhaust gas rapidly falls from the operating state of the internal combustion engine with a large feed amount of hydrocarbons, if the temperature of the exhaust purification catalyst 13 is low, the possibility of the exhaust purification catalyst becoming excessively hot is small. For this reason, in the operational control of the present embodiment, control is performed to reduce the feed amount of hydrocarbons by the hydrocarbon feed valve 15 if the catalyst temperature is higher than the predetermined catalyst temperature judgment value.

At step 116, the catalyst temperature TC is detected. Next, at step 117, it is judged if the catalyst temperature TC is larger than a predetermined first catalyst temperature judgment value. The first catalyst temperature judgment value can be set in advance. When the catalyst temperature TC is the first catalyst temperature judgment value or less, the routine proceeds to step 119. In this case, the catalyst temperature is sufficiently lower than the allowable temperature and it can be judged that the exhaust purification catalyst 13 will not become excessively hot.

At step 117, when the catalyst temperature TC is higher than the first catalyst temperature judgment value, the routine proceeds to step 118. In this case, it is possible to judge that the flow rate of exhaust gas rapidly decreases from the operating state with a large feed amount of hydrocarbons and the exhaust purification catalyst 13 becomes excessively hot.

At step 118, control is performed to prohibit the first NO_{X} removal method for a predetermined period of time. When already performing the first NO_{X} removal method, control is performed to stop the first NO_{X} removal method. That is, control is performed to prohibit the feed of hydrocarbons from the hydrocarbon feed valve which feeds hydrocarbons by within a predetermined range of amplitude and by within a predetermined range of period. NO_{X} can be removed by using the second NO_{X} removal method.

As the length of time for prohibiting the first NO_{X} removal method, it is possible to employ a predetermined length of time. Alternatively, it is possible to use the rate of fall of the flow rate of exhaust gas or the temperature of the exhaust purification catalyst or other state of the exhaust purification catalyst as the basis to determine the length of time for prohibiting the first NO_{X} removal method. After the elapse of a predetermined time, it is possible to resume the first NO_{X} removal method. Alternatively, it is possible to stop the feed of hydrocarbons of the first NO_{X} removal method, then detect the state of the exhaust purification catalyst and, when the state of the exhaust purification catalyst becomes a predetermined, allow the first NO_{X} removal method.

In the first operational control in the present embodiment, control is performed to prohibit the first NO_{X} removal method, but the invention is not limited to this. In the first NO_{X} removal method, it is possible to perform control to reduce the feed amount of hydrocarbons which are fed by within a predetermined range of amplitude and by within a predetermined range of period. That is, it is possible to perform control to reduce the average feed amount of hydrocarbons which are fed per unit time. For example, it is possible to employ at least one control between control for reducing the feed amount of hydrocarbons per feed and control for extending the feed interval of hydrocarbons. For the amount of reduction of the feed of hydrocarbons, for example, it is possible to employ a predetermined amount.

In the first operational control of the present embodiment, even when the flow rate of exhaust gas falls rapidly from the operating state where the feed amount of hydrocarbons from the hydrocarbon feed valve is large, it is possible to keep the exhaust purification catalyst from becoming excessively hot.

Next, the second operational control of an exhaust purification system of the present embodiment will be explained. As another operating state where the exhaust purification catalyst is liable to become excessively hot, the case where when the particulate matter which deposits on the exhaust purification catalyst is large, a case of using the first NO_{X} removal method to feed a large amount of hydrocarbons from the hydrocarbon feed valve may be mentioned. In this case, sometimes the deposited particulate matter starts to burn and the exhaust purification catalyst becomes excessively hot. In the second operational control of the present embodiment, when the amount of deposition of particulate matter which deposits at the exhaust purification catalyst is large, control is performed to reduce the feed amount of hydrocarbons by the hydrocarbon feed valve.

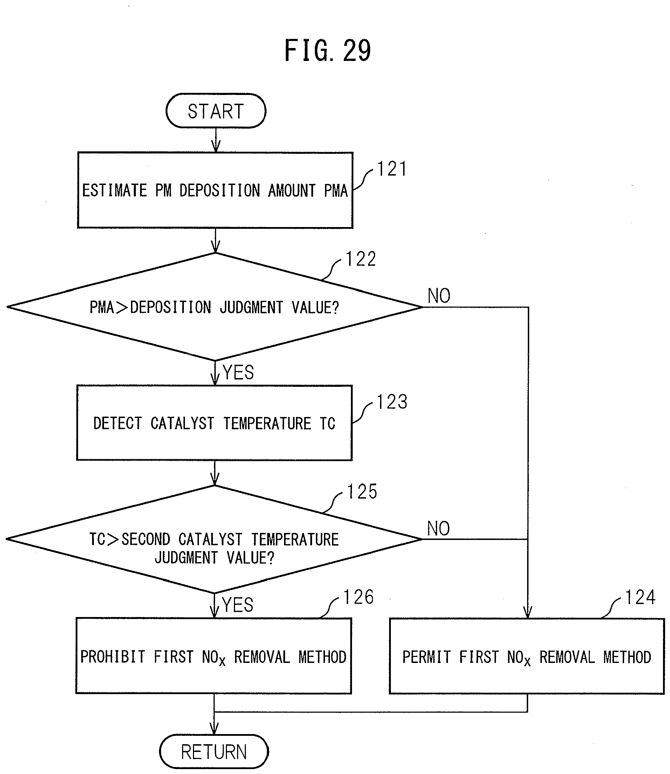

FIG. 29 is a flow chart of second operational control of the exhaust purification catalyst in the present embodiment. The operational control which is shown in FIG. 29 is, for example, repeated every predetermined time interval.

At step 121, the amount of deposition of particulate matter PMA at the exhaust purification catalyst 13 is estimated. The amount of deposition of particulate matter can, for example, be estimated by the output of the differential pressure sensor 24 which is attached to the exhaust purification catalyst 13.

At step 122, it is judged if the amount of deposition of particulate matter PMA is larger than a predetermined deposition judgment value. The deposition judgment value can be set in advance. The deposition judgment value here can, for example, be a value less than the judgment value for raising the temperature of the exhaust purification catalyst to 600°C or more and burning the particulate matter.

When, at step 122, the amount of deposition of particulate matter PMA is the deposition judgment value or less, the routine proceeds to step 124. At step 124, control is performed to permit the first NO_{X} removal method. When already using the first NO_{X} removal method to remove NOₓ, control is performed to continue the first NO_{X} removal method. At step 122, when the amount of deposition of particulate matter of the exhaust purification catalyst 13 is larger than a deposition judgment value, the routine proceeds to step 123.

At step 123, the catalyst temperature TC of the exhaust purification catalyst 13 is detected. At step 125, it is judged if the catalyst temperature TC of the exhaust purification catalyst 13 is larger than the second catalyst temperature judgment value. The second catalyst temperature judgment value can be set in advance considering the temperature at which the exhaust purification catalyst 13 becomes excessively hot. When the exhaust purification catalyst 13 is the second catalyst temperature judgment value or less, the temperature of the exhaust purification catalyst 13 is low. Even if the particulate matter burns and the temperature of the exhaust purification catalyst 13 rises, it can be judged that the exhaust purification catalyst 13 has not reached the allowable temperature. When the exhaust purification catalyst 13 is the second catalyst temperature judgment value or less, the routine proceeds to step 124. When the exhaust purification catalyst 13 is larger than the second catalyst temperature judgment value, the routine proceeds to step 126.

At step 126, control is performed to prohibit the first NO_{X} removal method. That is, control is performed to prohibit the feed of hydrocarbons which are fed within a predetermined range of amplitude and by within a predetermined range of period. In the second operational control, control is performed to repeat the operational control which is shown in FIG. 29 to prohibit the first NO_{X} removal method until the amount of deposition of particulate matter becomes the deposition judgment value or less or until the exhaust purification catalyst becomes the second catalyst temperature judgment value or less. In this case, the NO_{X} can be removed by the second NO_{X} removal method.

Note that, at step 126, in the first NO_{X} removal method, control may be performed to reduce the feed amount of hydrocarbons which are fed within a predetermined range of amplitude and by within a predetermined range of period. For example, it is possible to employ at least one control of control for reducing the feed amount of hydrocarbons at each feed from the hydrocarbon feed valve 15 and control for lengthening the feed interval of hydrocarbons. The amount of reduction of feed of hydrocarbons can, for example, be set based on the amount of deposition of particulate matter and catalyst temperature etc.

In the second operational control of the present embodiment, it is possible to keep the exhaust purification catalyst from becoming excessively hot due to burning the particulate matter when the particulate matter deposits in a large amount. In this way, in the first operational control and second operational control in the present embodiment, it is possible to detect a change in the operating state of the internal combustion engine at which the catalyst temperature of the exhaust purification catalyst becomes excessively hot and change the pattern of feed of hydrocarbons from the hydrocarbon feed valve.

Note that in the above control routines, the order of the steps may be suitably changed within a range not changing the actions and functions. In the above figures, the same or equivalent parts are assigned the same reference notations. Note that the above embodiments are illustrative and do not limit the invention. Further, the embodiments include changes which are shown in the claims.

### Reference Signs List

1 engine body
2 combustion chamber
13 exhaust purification catalyst
15 hydrocarbon feed valve
16 EGR passage
17 EGR control valve
23 temperature sensor
24 differential pressure sensor
30 electronic control unit
50 catalyst carrier
51, 52 precious metal catalyst
53 basic part
54 exhaust flow surface part
55 promoter
60 inflow side passage
61 outflow side passage
64 partition wall part
65, 66 coated part
68 particulate matter

## Claims

1. An exhaust purification system of an internal combustion engine which is provided inside an engine exhaust passage (12) with a hydrocarbon feed valve (15) for feeding hydrocarbons, comprising:
an exhaust purification catalyst (13) for causing NOx which is contained in exhaust gas and hydrocarbons reformed at the exhaust purification catalyst (13) to react; and
a control device (30), wherein
the exhaust purification catalyst (13) is arranged downstream of the hydrocarbon feed valve (15) in the engine exhaust passage (12), carries precious metal catalysts (51, 52) and basic parts (53) on an exhaust gas flow surface of the exhaust purification catalyst (13), said basic parts (53) forming basic exhaust gas flow surface parts (54) around the precious metal catalysts (51, 52),
the exhaust purification catalyst (13) includes inflow side passages (60) into which exhaust gas flows, outflow side passages (61) out from which exhaust gas flows, and partition wall parts (64) which separate the inflow side passages (60) and the outflow side passages (61) and has the function of trapping particulate matter which is contained in the exhaust gas by the exhaust gas passing through the insides of the partition wall parts (64),
the precious metal catalysts (51, 52) and basic parts (53) are arranged at coated parts (65, 66) which are formed at the surfaces of the partition wall parts (64) and are arranged so that the oxidizing ability of the coated parts (65) of the inflow side passages (60) becomes higher than the oxidizing ability at the coated parts (66) of the outflow side passages (61),
the exhaust purification catalyst (13) has a property of reducing the NO_{X} which is contained in the exhaust gas if making a concentration of hydrocarbons which flow into the exhaust purification catalyst (13) oscillate within a predetermined range of amplitude (ΔH) and within a predetermined range of period (ΔT) and has a property of an amount of storage of NO_{X} which is contained in the exhaust gas increasing if making an oscillation period (ΔT) of the concentration of hydrocarbons longer than the predetermined range,
**characterized in that**
the control device (30) is formed so that at the time of engine operation, the amplitude of change of the concentration of hydrocarbons which flow into the exhaust purification catalyst (13) is made to become within the predetermined range of amplitude (ΔH) by control of a feed amount of hydrocarbons from the hydrocarbon feed valve (15) and the concentration of hydrocarbons which flow into the exhaust purification catalyst (13) is made to oscillate within the predetermined range of period (ΔT) by control of the feed interval of hydrocarbons from the hydrocarbon feed valve (15),
the control device (30) is formed so that an operating state of the internal combustion engine where the feed amount of hydrocarbons from the hydrocarbon feed valve (15) becomes greater is preset, and
the control device (30) is formed so that when the operating state of the internal combustion engine where the feed amount of hydrocarbons becomes greater shifts to a predetermined operating state where a flow rate of exhaust gas is reduced, the feed amount of hydrocarbons which is fed by within the predetermined range of amplitude (ΔH) and by within the predetermined range of period (ΔT) is reduced.

2. The exhaust purification system of internal combustion engine according to claim 1, wherein the exhaust purification catalyst (13) does not have the basic parts (53) arranged at the coated parts (65) of the inflow side passages (60) but has the basic parts (53) arranged at the coated parts (66) of the outflow side passages (61).

3. The exhaust purification system of internal combustion engine according to claim 1, wherein the exhaust purification catalyst (13) is formed so that precious metal catalysts (51, 52) and the basic parts (53) are arranged at the coated parts (65) of the inflow side passages (60) and the coated parts (66) of the outflow side passages (61) and the weight per unit volume of the basic parts (53) which are arranged at the coated parts (65) of the inflow side passages (60) becomes smaller than the weight per unit volume of the basic parts (53) which are arranged at the coated parts (66) of the outflow side passages (61).

4. The exhaust purification system of internal combustion engine according to claim 1, wherein the control device (30) is formed so that when the operating state of the internal combustion engine where the feed amount of hydrocarbons becomes greater shifts to the predetermined operating state where the flow rate of exhaust gas is reduced, the feed of hydrocarbons which are fed by within the predetermined range of amplitude (ΔH) and by within the predetermined range of period (ΔT) is prohibited.

5. An exhaust purification system of an internal combustion engine which is provided inside an engine exhaust passage (12) with a hydrocarbon feed valve (15) for feeding hydrocarbons, comprising:
an exhaust purification catalyst (13) for causing NO_{X} which is contained in exhaust gas and hydrocarbons reformed at the exhaust purification catalyst (13) to react; and
a control device (30), wherein
the exhaust purification catalyst (13) is arranged downstream of the hydrocarbon feed valve (15) in the engine exhaust passage (12), carries precious metal catalysts (51, 52) and basic parts (53) on an exhaust gas flow surface of the exhaust purification catalyst (13), said basic parts (53) forming basic exhaust gas flow surface parts (54) around the precious metal catalysts (51, 52),
the exhaust purification catalyst (13) includes inflow side passages (60) into which exhaust gas flows, outflow side passages (61) out from which exhaust gas flows, and partition wall parts (64) which separate the inflow side passages (60) and the outflow side passages (61) and has the function of trapping particulate matter which is contained in the exhaust gas by the exhaust gas passing through the insides of the partition wall parts (64),
the precious metal catalysts (51, 52) and basic parts (53) are arranged at coated parts (65, 66) which are formed at the surfaces of the partition wall parts (64) and are arranged so that the oxidizing ability of the coated parts (65) of the inflow side passages (60) becomes higher than the oxidizing ability at the coated parts (66) of the outflow side passages (61),
the exhaust purification catalyst (13) has a property of reducing the NO_{X} which is contained in the exhaust gas if making a concentration of hydrocarbons which flow into the exhaust purification catalyst (13) oscillate within a predetermined range of amplitude (ΔH) and within a predetermined range of period (ΔT) and has a property of an amount of storage of NO_{X} which is contained in the exhaust gas increasing if making an oscillation period (ΔT) of the concentration of hydrocarbons longer than the predetermined range,
**characterized in that**
the control device (30) is formed so that at the time of engine operation, the amplitude of change of the concentration of hydrocarbons which flow into the exhaust purification catalyst (13) is made to become within the predetermined range of amplitude (ΔH) by control of a feed amount of hydrocarbons from the hydrocarbon feed valve (15) and the concentration of hydrocarbons which flow into the exhaust purification catalyst (13) is made to oscillate within the predetermined range of period (ΔT) by control of the feed interval of hydrocarbons from the hydrocarbon feed valve (15),
the control device (30) is formed to estimate an amount of deposition of particulate matter (PMA) which deposits at the exhaust purification catalyst (13) and a temperature (TC) of the exhaust purification catalyst (13), and
the control device (30) is formed so that when the amount of deposition of particulate matter (PMA) exceeds a predetermined deposition judgment value and, further, the temperature (TC) of the exhaust purification catalyst (13) exceeds a predetermined catalyst temperature judgment value, the feed amount of hydrocarbons which are fed from the hydrocarbon feed valve (15) by within the predetermined range of amplitude (ΔH) and by within the predetermined range of period (ΔT) is reduced.

6. The exhaust purification system of internal combustion engine according to claim 5, wherein the control device (30) is formed so that when the amount of deposition of particulate matter (PMA) exceeds the predetermined deposition judgment value and the temperature (TC) of the exhaust purification catalyst (13) further exceeds the predetermined catalyst temperature judgment value, the feed of hydrocarbons which are fed from the hydrocarbon feed valve (15) by within a predetermined range of amplitude (ΔH) and by within the predetermined range of period (ΔT) is prohibited.

7. The exhaust purification system of internal combustion engine according to claim 5, wherein the exhaust purification catalyst (13) does not have the basic parts (53) arranged at the coated parts (65) of the inflow side passages (60) but has the basic parts (53) arranged at the coated parts (66) of the outflow side passages (61).

8. The exhaust purification system of internal combustion engine according to claim 5, wherein the exhaust purification catalyst (13) is formed so that precious metal catalysts (51, 52) and the basic parts (53) are arranged at the coated parts (65) of the inflow side passages (60) and the coated parts (66) of the outflow side passages (61) and the weight per unit volume of the basic parts (53) which are arranged at the coated parts (65) of the inflow side passages (60) becomes smaller than the weight per unit volume of the basic parts (53) which are arranged at the coated parts (66) of the outflow side passages (61).

## Patentansprüche

1. Abgasreinigungssystem eines Verbrennungsmotors, das innerhalb eines Motorabgasdurchgangs (12) mit einem Kohlenwasserstoff-Zuführventil (15) zum Zuführen von Kohlenwasserstoffen versehen ist, mit:
einem Abgasreinigungskatalysator (13), um NOx, das in Abgas enthalten ist, und an dem Abgasreinigungskatalysator (13) reformierte Kohlenwasserstoffe zur Reaktion zu bringen; und
einem Steuergerät (30), wobei
der Abgasreinigungskatalysator (13) in dem Motorabgasdurchgang (12) stromabwärts vom Kohlenwasserstoff-Zuführventil (15) angeordnet ist, auf einer Abgasströmungsoberfläche des Abgasreinigungskatalysators (13) Edelmetallkatalysatoren (51, 52) und unedle Teile (53) trägt, wobei die unedlen Teile (53) um die Edelmetallkatalysatoren (51, 52) herum unedle Abgasströmungsoberflächenteile (54) ausbilden,
der Abgasreinigungskatalysator (13) einströmseitige Durchgänge (60), in die Abgas hineinströmt, ausströmseitige Durchgänge (61), aus denen Abgas herausströmt, und Trennwandabschnitte (64) aufweist, die die einströmseitigen Durchgänge (60) und die ausströmseitigen Durchgänge (61) trennen, und die Funktion hat, Partikeln, die in dem Abgas enthalten sind, einzufangen, wenn das Abgas durch das Innere der Trennwandteile (64) hindurchgeht,
die Edelmetallkatalysatoren (51, 52) und unedlen Teile (53) an beschichteten Teilen (65, 66) angeordnet sind, die an den Oberflächen der Trennwandteile (64) ausgebildet sind, und so angeordnet sind, dass das Oxidationsvermögen der beschichteten Teile (65) der einströmseitigen Durchgänge (60) höher als das Oxidationsvermögen der beschichteten Teile (66) der ausströmseitigen Durchgänge (61) wird,
der Abgasreinigungskatalysator (13) die Eigenschaft hat, das NOx, das in dem Abgas enthalten ist, zu reduzieren, falls eine Konzentration an Kohlenwasserstoffen, die in den Abgasreinigungskatalysator (13) hineinströmen, dazu gebracht wird, innerhalb eines vorbestimmten Amplitudenbereichs (ΔH) und innerhalb eines vorbestimmten Periodenbereichs (ΔT) zu oszillieren, und die Eigenschaft hat, eine Speichermenge an NOx, das in dem Abgas enthalten ist, zu erhöhen, falls eine Oszillationsperiode (ΔT) der Konzentration an Kohlenwasserstoffen dazu gebracht wird, länger als der vorbestimmte Bereich zu sein,
**dadurch gekennzeichnet, dass**
das Steuergerät (30) so ausgebildet ist, dass während des Motorbetriebs die Änderungsamplitude der Konzentration an Kohlenwasserstoffen, die in den Abgasreinigungskatalysator (13) hineinströmen, durch Steuerung einer Zuführmenge an Kohlenwasserstoffen vom Kohlenwasserstoff-Zuführventil (15) dazu gebracht wird, in den vorbestimmten Amplitudenbereich (ΔH) zu fallen, und die Konzentration an Kohlenwasserstoffen, die in den Abgasreinigungskatalysator (13) hineinströmen, durch Steuerung des Zuführintervalls an Kohlenwasserstoffen vom Kohlenwasserstoff-Zuführventil (15) dazu gebracht wird, innerhalb des vorbestimmten Periodenbereichs (ΔT) zu oszillieren,
das Steuergerät (30) so ausgebildet ist, dass ein Betriebszustand des Verbrennungsmotors voreingestellt ist, in dem die Zuführmenge an Kohlenwasserstoffen vom Kohlenwasserstoff-Zuführventil (15) größer wird, und
das Steuergerät (30) so ausgebildet ist, dass die Zuführmenge an Kohlenwasserstoffen, die innerhalb des vorbestimmten Amplitudenbereichs (ΔH) und innerhalb des vorbestimmten Periodenbereichs (ΔT) zugeführt wird, reduziert wird, wenn der Betriebszustand des Verbrennungsmotors, in dem die Zuführmenge an Kohlenwasserstoffen größer wird, in einen vorbestimmten Betriebszustand übergeht, in dem eine Durchflussmenge an Abgas reduziert wird.

2. Abgasreinigungssystem eines Verbrennungsmotors nach Anspruch 1, wobei der Abgasreinigungskatalysator (13) die unedlen Teile (53) nicht an den beschichteten Teilen (65) der einströmseitigen Durchgänge (60), sondern an den beschichteten Teilen (66) der ausströmseitigen Durchgänge (61) angeordnet hat.

3. Abgasreinigungssystem eines Verbrennungsmotors nach Anspruch 1, wobei der Abgasreinigungskatalysator (13) so ausgebildet ist, dass an den beschichteten Teilen (65) der einströmseitigen Durchgänge (60) und den beschichteten Teilen (66) der ausströmseitigen Durchgänge (61) Edelmetallkatalysatoren (51, 52) und die unedlen Teile (53) angeordnet sind und das Gewicht pro Volumeneinheit der unedlen Teile (53), die an den beschichteten Teilen (65) der einströmseitigen Durchgänge (60) angeordnet sind, kleiner als das Gewicht pro Volumeneinheit der unedlen Teile (53) wird, die an den beschichteten Teilen (66) der ausströmseitigen Durchgänge (61) angeordnet sind.

4. Abgasreinigungssystem eines Verbrennungsmotors nach Anspruch 1, wobei das Steuergerät (30) so ausgebildet ist, dass die Zufuhr an Kohlenwasserstoffen, die innerhalb des vorbestimmten Amplitudenbereichs (ΔH) und innerhalb des vorbestimmten Periodenbereichs (ΔT) zugeführt werden, unterbunden wird, wenn der Betriebszustand des Verbrennungsmotors, in dem die Zuführmenge an Kohlenwasserstoffen größer wird, in den vorbestimmten Betriebszustand übergeht, in dem die Durchflussmenge an Abgas reduziert wird.

5. Abgasreinigungssystem eines Verbrennungsmotors, das innerhalb eines Motorabgasdurchgangs (12) mit einem Kohlenwasserstoff-Zuführventil (15) zum Zuführen von Kohlenwasserstoffen versehen ist, mit:
einem Abgasreinigungskatalysator (13), um NOx, das in Abgas enthalten ist, und an dem Abgasreinigungskatalysator (13) reformierte Kohlenwasserstoffe zur Reaktion zu bringen; und
einem Steuergerät (30), wobei
der Abgasreinigungskatalysator (13) in dem Motorabgasdurchgang (12) stromabwärts vom Kohlenwasserstoff-Zuführventil (15) angeordnet ist, auf einer Abgasströmungsoberfläche des Abgasreinigungskatalysators (13) Edelmetallkatalysatoren (51, 52) und unedle Teile (53) trägt, wobei die unedlen Teile (53) um die Edelmetallkatalysatoren (51, 52) herum unedle Abgasströmungsoberflächenteile (54) ausbilden,
der Abgasreinigungskatalysator (13) einströmseitige Durchgänge (60), in die Abgas hineinströmt, ausströmseitige Durchgänge (61), aus denen Abgas herausströmt, und Trennwandteile (64) aufweist, die die einströmseitigen Durchgänge (60) und die ausströmseitigen Durchgänge (61) trennen, und die Funktion hat, Partikeln, die in dem Abgas enthalten sind, einzufangen, wenn das Abgas durch das Innere der Trennwandteile (64) hindurchgeht,
die Edelmetallkatalysatoren (51, 52) und unedlen Teile (53) an beschichteten Teilen (65, 66) angeordnet sind, die an den Oberflächen der Trennwandteile (64) ausgebildet sind, und so angeordnet sind, dass das Oxidationsvermögen der beschichteten Teile (65) der einströmseitigen Durchgänge (60) höher als das Oxidationsvermögen der beschichteten Teile (66) der ausströmseitigen Durchgänge (61) wird,
der Abgasreinigungskatalysator (13) die Eigenschaft hat, das NOx, das in dem Abgas enthalten ist, zu reduzieren, falls eine Konzentration an Kohlenwasserstoffen, die in den Abgasreinigungskatalysator (13) hineinströmen, dazu gebracht wird, innerhalb eines vorbestimmten Amplitudenbereichs (ΔH) und innerhalb eines vorbestimmten Periodenbereichs (ΔT) zu oszillieren, und die Eigenschaft hat, eine Speichermenge an NOx, das in dem Abgas enthalten ist, zu erhöhen, falls eine Oszillationsperiode (ΔT) der Konzentration an Kohlenwasserstoffen dazu gebracht wird, länger als der vorbestimmte Bereich zu sein,
**dadurch gekennzeichnet, dass**
das Steuergerät (30) so ausgebildet ist, dass während des Motorbetriebs die Änderungsamplitude der Konzentration an Kohlenwasserstoffen, die in den Abgasreinigungskatalysator (13) hineinströmen, durch Steuerung einer Zuführmenge an Kohlenwasserstoffen vom Kohlenwasserstoff-Zuführventil (15) dazu gebracht wird, in den vorbestimmten Amplitudenbereich (ΔH) zu fallen, und die Konzentration an Kohlenwasserstoffen, die in den Abgasreinigungskatalysator (13) hineinströmen, durch Steuerung des Zuführintervalls an Kohlenwasserstoffen vom Kohlenwasserstoff-Zuführventil (15) dazu gebracht wird, innerhalb des vorbestimmten Periodenbereichs (ΔT) zu oszillieren,
das Steuergerät (30) so ausgebildet ist, dass es eine Ablagerungsmenge an Partikeln (PMA), die sich am Abgasreinigungskatalysator (13) ablagern, und eine Temperatur (TC) des Abgasreinigungskatalysators (13) schätzt, und
das Steuergerät (30) so ausgebildet ist, dass die Zuführmenge an Kohlenwasserstoffen, die vom Kohlenwasserstoff-Zuführventil (15) innerhalb des vorbestimmten Amplitudenbereichs (ΔH) und innerhalb des vorbestimmten Periodenbereichs (ΔT) zugeführt werden, reduziert wird, wenn die Ablagerungsmenge an Partikeln (PMA) einen vorbestimmten Ablagerungsbeurteilungswert überschreitet und zudem die Temperatur (TC) des Abgasreinigungskatalysators (13) einen vorbestimmten Katalysatortemperaturbeurteilungswert überschreitet.

6. Abgasreinigungssystem eines Verbrennungsmotors nach Anspruch 5, wobei das Steuergerät (30) so ausgebildet ist, dass die Zufuhr an Kohlenwasserstoffen, die vom Kohlenwasserstoff-Zuführventil (15) innerhalb eines vorbestimmten Amplitudenbereichs (ΔH) und innerhalb des vorbestimmten Periodenbereichs (ΔT) zugeführt werden, unterbunden wird, wenn die Ablagerungsmenge an Partikeln (PMA) den vorbestimmten Ablagerungsbeurteilungswert überschreitet und zudem die Temperatur (TC) des Abgasreinigungskatalysators (13) den vorbestimmten Katalysatortemperaturbeurteilungswert überschreitet.

7. Abgasreinigungssystem eines Verbrennungsmotors nach Anspruch 5, wobei der Abgasreinigungskatalysator (13) die unedlen Teile (53) nicht an den beschichteten Teilen (65) der einströmseitigen Durchgänge (60), sondern an den beschichteten Teilen (66) der ausströmseitigen Durchgänge (61) angeordnet hat.

8. Abgasreinigungssystem eines Verbrennungsmotors nach Anspruch 5, wobei der Abgasreinigungskatalysator (13) so ausgebildet ist, dass an den beschichteten Teilen (65) der einströmseitigen Durchgänge (60) und den beschichteten Teile (66) der ausströmseitigen Durchgänge (61) Edelmetallkatalysatoren (51, 52) und die unedlen Teile (53) angeordnet sind und das Gewicht pro Volumeneinheit der unedlen Teile (53), die an den beschichteten Teilen (65) der einströmseitigen Durchgänge (60) angeordnet sind, kleiner als das Gewicht pro Volumeneinheit der unedlen Teile (53) wird, die an den beschichteten Teilen (66) der ausströmseitigen Durchgänge (61) angeordnet sind.

## Revendications

1. Système de purification d'échappement d'un moteur à combustion interne qui est disposé à l'intérieur d'un passage d'échappement de moteur (12) avec une vanne d'introduction d'hydrocarbures (15) pour introduire des hydrocarbures, comprenant :
un catalyseur de purification d'échappement (13) pour provoquer la réaction de NOₓ qui sont contenus dans le gaz d'échappement et d'hydrocarbures récupérés au niveau du catalyseur de purification d'échappement (13) ; et
un dispositif de commande (30), dans lequel
le catalyseur de purification d'échappement (13) est disposé en aval de la vanne d'introduction d'hydrocarbures (15) dans le passage d'échappement de moteur (12), porte des catalyseurs à base de métaux précieux (51, 52) et des parties basiques (53) sur une surface d'écoulement de gaz d'échappement du catalyseur de purification d'échappement (13), lesdites parties basiques (53) formant des parties de surface d'écoulement de gaz d'échappement basiques (54) autour des catalyseurs à base de métaux précieux (51, 52),
le catalyseur de purification d'échappement (13) comprend des passages du côté admission (60) dans lesquels le gaz d'échappement s'écoule, des passages du côté échappement (61) hors desquels le gaz d'échappement s'écoule, et des parties de paroi de séparation (64) qui séparent les passages du côté admission (60) et les passages du côté échappement (61) et a pour fonction de piéger les matières particulaires qui sont contenues dans le gaz d'échappement par le passage du gaz d'échappement à travers les intérieurs des parties de paroi de séparation (64),
les catalyseurs à base de métaux précieux (51, 52) et les parties basiques (53) sont disposés au niveau de parties revêtues (65, 66) qui sont formées au niveau des surfaces des parties de paroi de séparation (64) et sont disposés de façon que la capacité d'oxydation des parties revêtues (65) des passages du côté admission (60) devienne supérieure à la capacité d'oxydation au niveau des parties revêtues (66) des passages du côté échappement (61),
le catalyseur de purification d'échappement (13) a pour propriété de réduire les NOₓ qui sont contenus dans le gaz d'échappement s'il amène la concentration d'hydrocarbures qui s'écoulent dans le catalyseur de purification d'échappement (13) à osciller à l'intérieur d'une plage d'amplitude prédéterminée (ΔH) et à l'intérieur d'une plage de période prédéterminée (ΔT) et a pour propriété d'augmenter la quantité de stockage des NOₓ qui sont contenus dans le gaz d'échappement s'il amène une période d'oscillation (ΔT) de la concentration d'hydrocarbures à être plus longue que la plage prédéterminée,
**caractérisé en ce que**
le dispositif de commande (30) est formé de façon que, lors du fonctionnement du moteur, l'amplitude de changement de la concentration d'hydrocarbures qui s'écoulent dans le catalyseur de purification d'échappement (13) soit amenée à devenir située à l'intérieur de la plage d'amplitude prédéterminée (ΔH) par la commande de la quantité d'introduction d'hydrocarbures depuis la vanne d'introduction d'hydrocarbures (15), et la concentration d'hydrocarbures qui s'écoulent dans le catalyseur de purification d'échappement (13) soit amenée à osciller à l'intérieur de la plage de période prédéterminée (ΔT) par commande de l'intervalle d'alimentation d'hydrocarbures depuis la vanne d'introduction d'hydrocarbures (15),
le dispositif de commande (30) est formé de façon qu'un état opérationnel du moteur à combustion interne où la quantité d'introduction d'hydrocarbures depuis la vanne d'introduction d'hydrocarbures (15) devient supérieure soit préétabli, et
le dispositif de commande (30) est formé de façon que, lorsque l'état opérationnel du moteur à combustion interne où la quantité d'introduction d'hydrocarbures devient plus importante passe à un état opérationnel prédéterminé où le débit de gaz d'échappement est réduit, la quantité d'introduction d'hydrocarbures introduits dans la plage d'amplitude prédéterminée (ΔH) et dans la plage de période prédéterminée (ΔT) soit réduite.

2. Système de purification d'échappement d'un moteur à combustion interne selon la revendication 1, dans lequel le catalyseur de purification d'échappement (13) n'a pas les parties basiques (53) disposées au niveau des parties revêtues (65) des passages du côté admission (60) mais a les parties basiques (53) disposées au niveau des parties revêtues (66) des passages du côté échappement (61).

3. Système de purification d'échappement d'un moteur à combustion interne selon la revendication 1, dans lequel le catalyseur de purification d'échappement (13) est formé de façon que des catalyseurs à base de métaux précieux (51, 52) et les parties basiques (53) soient disposés au niveau des parties revêtues (65) des passages du côté admission (60) et des parties revêtues (66) des passages du côté échappement (61), et le poids par volume unitaire des parties basiques (53) qui sont disposées au niveau des parties revêtues (65) des passages du côté admission (60) devient inférieur au poids par volume unitaire des parties basiques (53) qui sont disposées au niveau des parties revêtues (66) des passages du côté échappement (61).

4. Système de purification d'échappement d'un moteur à combustion interne selon la revendication 1, dans lequel le dispositif de commande (30) est formé de façon que, lorsque l'état opérationnel du moteur à combustion interne où la quantité introduite d'hydrocarbures devient plus élevée passe à l'état opérationnel prédéterminé où le débit de gaz d'échappement est réduit, l'introduction d'hydrocarbures qui sont introduits dans la plage prédéterminée d'amplitude prédéterminée (ΔH) et dans la plage prédéterminée de période (ΔT) soit prohibée.

5. Système de purification d'échappement d'un moteur à combustion interne qui est disposé à l'intérieur d'un passage d'échappement de moteur (12) avec une vanne d'introduction d'hydrocarbures (15) pour introduire des hydrocarbures, comprenant :
un catalyseur de purification d'échappement (13) pour provoquer la réaction de NOₓ qui sont contenus dans le gaz d'échappement et d'hydrocarbures récupérés au niveau du catalyseur de purification d'échappement (13) ; et
un dispositif de commande (30), dans lequel
le catalyseur de purification d'échappement (13) est disposé en aval de la vanne d'introduction d'hydrocarbures (15) dans le passage d'échappement de moteur (12), porte des catalyseurs à base de métaux précieux (51, 52) et des parties basiques (53) sur une surface d'écoulement de gaz d'échappement du catalyseur de purification d'échappement (13), lesdites parties basiques (53) formant des parties de surface d'écoulement de gaz d'échappement basiques (54) autour des catalyseurs à base de métaux précieux (51, 52),
le catalyseur de purification d'échappement (13) comprend des passages du côté admission (60) dans lesquels le gaz d'échappement s'écoule, des passages du côté échappement (61) hors desquels le gaz d'échappement s'écoule, et des parties de paroi de séparation (64) qui séparent les passages du côté admission (60) et les passages du côté échappement (61) et a pour fonction de piéger les matières particulaires qui sont contenues dans le gaz d'échappement par le passage du gaz d'échappement à travers les intérieurs des parties de paroi de séparation (64),
les catalyseurs à base de métaux précieux (51, 52) et les parties basiques (53) sont disposés au niveau de parties revêtues (65, 66) qui sont formées au niveau des surfaces des parties de paroi de séparation (64) et sont disposés de façon que la capacité d'oxydation des parties revêtues (65) des passages du côté admission (60) devienne supérieure à la capacité d'oxydation au niveau des parties revêtues (66) des passages du côté échappement (61),
le catalyseur de purification d'échappement (13) a pour propriété de réduire les NOₓ qui sont contenus dans le gaz d'échappement s'il amène la concentration d'hydrocarbures qui s'écoulent dans le catalyseur de purification d'échappement (13) à osciller à l'intérieur d'une plage d'amplitude prédéterminée (ΔH) et à l'intérieur d'une plage de période prédéterminée (ΔT) et a pour propriété d'augmenter la quantité de stockage des NOₓ qui sont contenus dans le gaz d'échappement s'il amène une période d'oscillation (ΔT) de la concentration d'hydrocarbures à être plus longue que la plage prédéterminée,
**caractérisé en ce que**
le dispositif de commande (30) est formé de façon que, lors du fonctionnement du moteur, l'amplitude de changement de la concentration d'hydrocarbures qui s'écoulent dans le catalyseur de purification d'échappement (13) soit amenée à devenir située à l'intérieur de la plage d'amplitude prédéterminée (ΔH) par la commande de la quantité d'introduction d'hydrocarbures depuis la vanne d'introduction d'hydrocarbures (15), et la concentration d'hydrocarbures qui s'écoulent dans le catalyseur de purification d'échappement (13) soit amenée à osciller à l'intérieur de la plage de période prédéterminée (ΔT) par commande de l'intervalle d'alimentation d'hydrocarbures depuis la vanne d'introduction d'hydrocarbures (15),
le dispositif de commande (30) est formé de façon à estimer la quantité de déposition de matières particulaires (PMA) qui se déposent au niveau du catalyseur de purification d'échappement (13) et la température (TC) du catalyseur de purification d'échappement (13), et
le dispositif de commande (30) est formé de façon que, lorsque la quantité de déposition de matières particulaires (PMA) dépasse une valeur d'estimation de déposition prédéterminée, et en outre la température (TC) du catalyseur de purification (13) dépasse une valeur d'estimation de température de catalyseur prédéterminée, la quantité d'introduction d'hydrocarbures qui sont introduits depuis la vanne d'introduction d'hydrocarbures (15) dans la plage d'amplitude prédéterminée (ΔH) et dans la plage de période prédéterminée (ΔT) soit réduite.

6. Système de purification d'échappement d'un moteur à combustion interne selon la revendication 5, dans lequel le dispositif de commande (30) est formé de façon que, lorsque la quantité de déposition de matières particulaires (PMA) dépasse la valeur d'estimation de déposition prédéterminée, et en outre la température (TC) du catalyseur de purification (13) dépasse la valeur d'estimation de température de catalyseur prédéterminée, l'introduction d'hydrocarbures qui sont introduits depuis la vanne d'introduction d'hydrocarbures (15) dans une plage prédéterminée d'amplitude prédéterminée (ΔH) et dans la plage prédéterminée de période (ΔT) soit prohibée.

7. Système de purification d'échappement d'un moteur à combustion interne selon la revendication 5, dans lequel le catalyseur de purification d'échappement (13) n'a pas les parties basiques (53) disposées au niveau des parties revêtues (65) des passages du côté admission (60) mais a les parties basiques (53) disposées au niveau des parties revêtues (66) des passages du côté échappement (61).

8. Système de purification d'échappement d'un moteur à combustion interne selon la revendication 5, dans lequel le catalyseur de purification d'échappement (13) est formé de façon que des catalyseurs à base de métaux précieux (51, 52) et les parties basiques (53) soient disposés au niveau des parties revêtues (65) des passages du côté admission (60) et des parties revêtues (66) des passages du côté échappement (61), et le poids par volume unitaire des parties basiques (53) qui sont disposées au niveau des parties revêtues (65) des passages du côté admission (60) devient inférieur au poids par volume unitaire des parties basiques (53) qui sont disposées au niveau des parties revêtues (66) des passages du côté échappement (61).
